# EUROPEAN PATENT APPLICATION

(11) **EP 4 741 588 A1**
(43) Date of publication of application: **13.05.2026**
(21) Application number: 25215314.3
(22) Date of filing: 12.11.2025
(51) Int. Cl.: E02F 9/26

(54) **VIRTUAL SAFETY BUBBLES FOR SAFE NAVIGATION OF CONSTRUCTION VEHICLES**

(30) Priority: 12.11.2024 US 202463719476 P
(71) Applicant: Deere & Company, Moline, IL 61265-8098 (US)
(72) Inventor: SRIPADAM, Maya Devi, Monte Sereno, CA (US); CHAWLA, Sumit, San Carlos, CA (US); WARDEN, Grant, Santa Clara, CA (US); ROSS, Charles McCauley, Los Altos, CA (US); GOLDSTEIN, Jacob, Auburn, CA (US); OSTROWSKI, James Patrick, Mountain View, CA (US); ELCANO, Michael Albert, Bakersfield, CA (US)
(74) Representative: Scintilla Intellectual Property Ltd

(57) **Abstract**

A control system deploys a virtual safety bubble for autonomous operation of a construction vehicle in a worksite. The control system obtains a work schedule for the construction vehicle to perform one construction action. The control system identifies one or more objects to be interacted with by the construction vehicle while performing the one construction action. The control system deploys a virtual safety bubble for the construction vehicle based on the one construction action. Breach of the virtual safety bubble triggers remedial actions; however, the virtual safety bubble permits breach by the one or more identified objects during the construction action. The control system detects breach of the virtual safety bubble by the one or more identified objects during the construction action. Responsive to the breach of the virtual safety bubble by the one or more identified objects during the construction action, the control system withholds the remedial actions.

## Description

### CROSS-REFERENCE TO RELATED APPLICATION

The present application claims the benefit of and priority to U.S. Provisional Application No. 63/719,476 filed on November 12, 2024, which is incorporated by reference.

### TECHNICAL FIELD

This disclosure generally relates to construction vehicles with autonomous navigation capabilities, i.e., autonomous construction vehicles. The autonomous construction vehicles are generally utilized in construction environments to perform different construction actions.

### BACKGROUND

Construction vehicles generally outsize human operators and various other objects in their environment. With such bulk in size, such construction vehicles generally have difficulty gauging the proximity of objects to the construction vehicles. As such, operators must move slowly and with great care, especially in confined or dense environments. The challenge in navigating such environments is further compounded in the case with the automation of such construction vehicles.

### SUMMARY

A construction vehicle is configured to generate and maintain a virtual safety bubble that enables the construction vehicle to autonomously perform construction actions in the environment safely. The construction vehicle is a navigable vehicle with at least a detection system and a control system, among other components for performing the construction actions. The detection system includes one or more detection mechanisms, e.g., cameras, for capturing image data of the surrounding environment. The detection system may have a 360-degree construction site of view, aggregated from the individual construction sites of view of the detection mechanisms. The control system, e.g., a general computing system, controls operation of the various components. To aid in the safe navigation of the construction vehicle, the control system may generate and maintain a virtual safety bubble based on a configuration of the construction vehicle. The control system may dynamically and automatically adjust the virtual safety bubble as the construction vehicle switches between different configurations and/or performs different actions. The control system detects when an obstacle breaches the virtual safety bubble. When an object is determined to have breached, i.e., is within the virtual safety bubble, the control system may terminate or cease operations, and/or may enact other preventive measures. Preventive measures include rerouting the construction vehicle around the obstacle, changing a configuration of the construction vehicle, requesting input from an operator or a manager, etc.

### BRIEF DESCRIPTION OF THE DRAWINGS

FIG. 1A illustrates a construction vehicle with a bulldozing mechanism, in accordance with one or more embodiments.
FIG. 1B illustrates a construction vehicle with an excavating mechanism, in accordance with one or more embodiments.
FIG. 1C illustrates a construction vehicle with , in accordance with one or more embodiments.
FIG. 2 illustrates a block diagram of the system environment for the construction vehicle, in accordance with one or more embodiments.
FIG. 3A illustrates a construction vehicle with one or more inherent blind spots based on the positioning of a plurality of detection mechanisms, in accordance with one or more embodiments.
FIG. 3B illustrates a construction vehicle with one or more blind spots caused by components of the construction vehicle obstructing a partial view of the detection mechanism, in accordance with one or more embodiments.
FIG. 4A illustrates a first virtual safety bubble around a construction vehicle, in accordance with one or more embodiments.
FIG. 4B illustrates dynamically modifying the virtual safety bubble around a construction vehicle, in accordance with one or more embodiments.
FIG. 5 illustrates a flowchart of the method for dynamically modifying the virtual safety bubble during operation of the construction vehicle, in accordance with one or more embodiments.
FIG. 6 illustrates a verification process of the detection systems of the construction vehicle, in accordance with one or more embodiments.
FIG. 7 illustrates a notification that the construction vehicle is establishing the virtual safety bubble, in accordance with one or more embodiments.
FIG. 8 illustrates a notification transmitted to a client device regarding a detected obstacle, in accordance with one or more embodiments.
FIG. 9 illustrates actions the construction vehicle may implement when detecting an object in the virtual safety bubble, in accordance with one or more embodiments.
FIG. 10 illustrates actions the construction vehicle may implement when detecting an object in the virtual safety bubble, in accordance with one or more embodiments.
FIG. 11 illustrates a navigational workflow of construction vehicle, in accordance with one or more embodiments.
FIG. 12 illustrates navigation of a construction vehicle on-path on a straight path, in accordance with one or more embodiments.
FIG. 13 illustrates navigation of a construction vehicle off-path on a straight path, in accordance with one or more embodiments.
FIG. 14 illustrates navigation of a construction vehicle on-path and off-center of a straight path, in accordance with one or more embodiments.
FIG. 15A illustrates navigation of a construction vehicle when off-path but perceived to be on-path, in accordance with one or more embodiments.
FIG. 15B illustrates navigation of a construction vehicle when on-path but perceived to be off-path, in accordance with one or more embodiments.
FIG. 16 illustrates navigation of a construction vehicle when on-turn on a curved path, in accordance with one or more embodiments.
FIG. 17 illustrates navigation of a construction vehicle when off-turn on a curved path, in accordance with one or more embodiments.
FIG. 18 illustrates an example computing system, in accordance with one or more embodiments.
FIG. 19 is a layout of a working site, according to one or more embodiments.
FIG. 20 is a layout of the working site, according to one or more embodiments.
FIG. 21 is a flowchart describing a process of deploying a vehicle-kinematic-aware virtual safety bubble, according to one or more embodiments.
FIG. 22 is a flowchart describing a process of deploying an environment-aware virtual safety bubble, according to one or more embodiments.
FIG. 23 is a flowchart describing a process of deploying a fleet-aware virtual safety bubble, according to one or more embodiments.
FIG. 24 is a flowchart describing a process of deploying a construction-action-aware virtual safety bubble, according to one or more embodiments.

### DETAILED DESCRIPTION

### I. INTRODUCTION

A vehicle (e.g., a construction vehicle) includes one or more sensors capturing information about the surroundings as the vehicle moves through an environment. The environment can include various objects (e.g., ground and obstructions) used to determine actions (e.g., performing a construction action, modifying a construction parameter, modifying an operational parameter, and modifying a sensor parameter, etc.) for the vehicle to operate in the environment.

The vehicle includes a control system that processes the information obtained by the sensors to generate corresponding actions. For example, the control system processes information to identify objects to generate corresponding construction actions. There are many examples of a vehicle processing visual information obtained by an image sensor coupled to the vehicle to identify environmental conditions, to plan out construction actions, to identify and avoid obstructions, or some combination thereof.

To aid in the safe navigation of the construction vehicle, the control system may generate and maintain a virtual safety bubble that triggers when an obstacle breaches the virtual safety bubble. When an object is determined to have breached, i.e., is within the virtual safety bubble, the control system may terminate or cease operations, and/or may enact other preventive measures. Preventive measures include rerouting the construction vehicle around the obstacle, changing a configuration of the construction vehicle, requesting input from an operator or a manager, etc.

The control system generates the virtual safety bubble based on a configuration of the construction vehicle. As the construction vehicle changes configuration, the control system can automatically and/or dynamically adjust the virtual safety bubble, by adjusting characteristics of the virtual safety bubble. For example, when the construction vehicle accelerates to a higher velocity, the control system can automatically and/or dynamically adjust a size of the virtual safety bubble to be larger than before to provide additional distance to enact the preventive measures. In another example, the construction vehicle may change its configuration to perform different construction actions, and the control system can automatically and/or dynamically adjust the parameters of the virtual safety bubble in response to the changed configuration.

### II. CONSTRUCTION SITE MANAGEMENT AND CONSTRUCTION PLANS

### Construction Site Management

Construction managers ("managers") are responsible for managing construction operations in one or more construction sites. Managers work to implement a construction objective within those construction sites and select from among a variety of construction actions to implement that construction objective. Traditionally, managers are, for example, a construction worker or a construction site manager that works the construction but could also be other people and/or systems configured to manage construction operations within the construction site. For example, a manager could be an automated construction vehicle, a machine learned computer model, etc. In some cases, a manager may be a combination of the managers described above. For example, a manager may include an operator assisted by a machine-learned model and one or more automated construction vehicles or could be an operator working in tandem with the construction vehicles.

Managers implement one or more construction objectives for a construction site. A construction objective is typically a macro-level goal for a construction site. For example, macro-level construction objectives may include clearing land, grading land, excavating material, bulldozing, pouring of concrete, craning materials, loading materials, erecting structures, forklifting materials, rolling, paving, drilling, cold milling, or any other suitable construction objective. However, construction objectives may also be a micro-level goal for the construction site. For example, micro-level construction objectives may include performing a small-scale action in the construction site, repairing or correcting a part of a construction vehicle, requesting feedback from a manager, etc. Of course, there are many possible construction objectives and combinations of construction objectives, and the previously described examples are not intended to be limiting.

Construction objectives are accomplished by one or more construction vehicles performing a series of construction actions. Construction vehicles are described in greater detail below. Construction actions are any operation implementable by a construction vehicle within the construction site that works towards a construction objective. Consider, for example, a construction objective of erecting a structure. This construction objective requires a litany of construction actions, e.g., clearing the construction site, excavating unwanted materials, grading the site, pouring concrete for a foundation, forklifting or craning materials for building the structure, constructing the structure, etc. Similarly, each construction action pertaining to the overall objective may be a construction objective in and of itself. For instance, clearing the construction site can require its own set of construction actions, e.g., bulldozing, deconstructing, loading, clearing, etc.

In other words, managers implement a construction plan in the construction site to accomplish a construction objective. A construction plan is a hierarchical set of macro-level and/or micro-level objectives that accomplish the construction objective of the manager. Within a construction plan, each macro or micro-objective may require a set of construction actions to accomplish, or each macro or micro-objective may be a construction action itself. So, to expand, the construction plan is a temporally sequenced set of construction actions to apply to the construction site that the manager expects will accomplish the construction objective.

When executing a construction plan in a construction site, the construction plan itself and/or its constituent construction objectives and construction actions have various results. A result is a representation as to whether, or how well, a construction vehicle accomplished the construction plan, construction objective, and/or construction action. A result may be a qualitative measure such as "accomplished" or "not accomplished," or may be a quantitative measure such as "10 tons of material loaded," or "5 pylons erected." Results can also be positive or negative, depending on the configuration of the construction vehicle or the implementation of the construction plan. Moreover, results can be measured by sensors of the construction vehicle, input by managers, or accessed from a datastore or a network.

Traditionally, managers have leveraged their experience, expertise, and technical knowledge when implementing construction actions in a construction plan. For example, a manager may rely on established best practices in determining a specific set of construction actions to perform in a construction plan to accomplish a construction objective. Other examples include leveraging their expertise in action order, or construction workflow.

Leveraging manager and historical knowledge to make decisions for a construction plan affects both spatial and temporal characteristics of a construction plan. For instance, construction actions in a construction plan have historically been applied to entire construction site rather than small portions of a construction site. For example, in the grand scheme of erecting a structure, the manager may plan out the entire schedule of actions that must be performed to achieve the goal of erecting the structure. Similarly, each construction action in the sequence of construction actions of a construction plan are historically performed at approximately the same time. For example, when a manager decides to fertilize a construction site, she fertilizes the construction site at approximately the same time; or, when the manager decides to harvest the construction site, she does so at approximately the same time.

Notably though, construction vehicles have greatly advanced in their capabilities. For example, construction vehicles continue to become more autonomous, include an increasing number of sensors and measurement devices, employ higher amounts of processing power and connectivity, and implement various machine vision algorithms to enable managers to successfully implement a construction plan.

Because of this increase in capability, managers are no longer limited to spatially and temporally monolithic implementations of construction actions in a construction plan. Instead, managers may leverage advanced capabilities of construction vehicles to implement construction plans that are highly localized and determined by real-time measurements in the construction site. In other words, rather than a manager applying a "best guess" construction plan to an entire construction site, they can implement individualized and informed construction plans in the construction site.

### III. CONSTRUCTION VEHICLE

### Overview

A construction vehicle that implements construction actions of a construction plan may have a variety of configurations, some of which are described in greater detail below.

The construction vehicle 100 generally includes a detection mechanism 110, a construction mechanism 120, and a control system 130. The construction vehicle 100 can additionally include a mounting mechanism 140, a verification mechanism 150, a power source, digital memory, communication apparatus, or any other suitable component that enables the construction vehicle 100 to implement construction actions in a construction plan. Moreover, the described components and functions of the construction vehicle 100 are just examples, and a construction vehicle 100 can have different or additional components and functions other than those described below.

### Operating Environment

The construction vehicle 100 operates in an operating environment. The operating environment is the environment surrounding the construction vehicle 100 while it implements construction actions of a construction plan. The operating environment may also include the construction vehicle 100 and its corresponding components itself.

The operating environment typically includes a construction site, and the construction vehicle 100 generally implements construction actions of the construction plan in the construction site. A construction site is a geographic area where the construction vehicle 100 implements a construction plan. The construction site may be an outdoor construction site but could also be an indoor location, or any other suitable environment.

A construction site may include any number of construction site portions. A construction site portion is a subunit of a construction site. For example, a construction site portion may be a portion of the construction site designated for a building structure. Or, in another example, a construction site portion may be tracks for movement of vehicles. The construction vehicle 100 can execute different construction actions for different construction site portions. For example, the construction vehicle 100 may grade a portion of land in preparation for erecting a structure, while organizing construction materials in another portion of the land. Moreover, a construction site and a construction site portion are largely interchangeable in the context of the methods and systems described herein. That is, construction plans and their corresponding construction actions may be applied to an entire construction site or a construction site portion depending on the circumstances at play.

### III.A EXAMPLE CONFIGURATIONS

### Detection mechanism(s)

The construction vehicle 100 may include a detection mechanism 110. The detection mechanism 110 identifies objects in the operating environment of the construction vehicle 100. To do so, the detection mechanism 110 obtains information describing the environment (e.g., sensor or image data), and processes that information to identify pertinent objects (e.g., obstacles, persons, other vehicles, etc.) in the operating environment. Identifying objects in the environment further enables the construction vehicle 100 to implement construction actions in the construction site. For example, the detection mechanism 110 may capture an image of the construction site and process the image to identify any human operators in the vicinity of the vehicle. The construction vehicle 100 then implements construction actions in the construction site based on the identified objects, e.g., avoiding collision with obstacles in the environment.

The construction vehicle 100 can include any number or type of detection mechanism 110 that may aid in determining and implementing construction actions. In some embodiments, the detection mechanism 110 includes one or more sensors. For example, the detection mechanism 110 can include a multispectral camera, a stereo camera, a CCD camera, a single lens camera, a CMOS camera, hyperspectral imaging system, LIDAR system (light detection and ranging system), a depth sensing system, dynamometer, IR camera, thermal camera, humidity sensor, light sensor, temperature sensor, an inertial measurement unit (IMU) sensor, an accelerometer, a sensor coupled to one or more motor assemblies controlling movement of the vehicle of components thereof, or any other suitable sensor. Further, the detection mechanism 110 may include an array of sensors (e.g., an array of cameras) configured to capture information about the environment surrounding the construction vehicle 100. For example, the detection mechanism 110 may include an array of cameras configured to capture an array of pictures representing the environment surrounding the construction vehicle 100. The detection mechanism 110 may also be a sensor that measures a state of the construction vehicle 100. For example, the detection mechanism 110 may be a speed sensor, a heat sensor, or some other sensor that can monitor the state of a component of the construction vehicle 100. Additionally, the detection mechanism 110 may also be a sensor that measures components during implementation of a construction action. The slip sensor may include a rotational sensor to track movement of a wheel on the vehicle. If a wheel's rotation is desynchronized with the speed of the vehicle, the slip sensor detects the desynchronization as a slip event. Whatever the case, the detection mechanism 110 senses information about the operating environment (including the construction vehicle 100).

A detection mechanism 110 may be mounted at any point on the mounting mechanism 140. Depending on where the detection mechanism 110 is mounted relative to the construction mechanism 120, one or the other may pass over a geographic area in the construction site before the other. For example, the detection mechanism 110 may be positioned on the mounting mechanism 140 such that it traverses over a geographic location before the construction mechanism 120 as the construction vehicle 100 moves through the construction site. In another examples, the detection mechanism 110 is positioned to the mounting mechanism 140 such that the two traverse over a geographic location at substantially the same time as the construction vehicle 100 moves through the filed. Similarly, the detection mechanism 110 may be positioned on the mounting mechanism 140 such that the construction mechanism 120 traverses over a geographic location before the detection mechanism 110 as the construction vehicle 100 moves through the construction site. The detection mechanism 110 may be statically mounted to the mounting mechanism 140, or may be removably or dynamically coupled to the mounting mechanism 140. In other examples, the detection mechanism 110 may be mounted to some other surface of the construction vehicle 100 or may be incorporated into another component of the construction vehicle 100. The detection mechanism 110 may be removably coupled to the construction vehicle 100.

### Verification mechanism(s)

The construction vehicle 100 may include a verification mechanism 150. Generally, the verification mechanism 150 records a measurement of the operating environment and the construction vehicle 100 may use the recorded measurement to verify or determine the extent of an implemented construction action (i.e., a result of the construction action).

To illustrate, consider an example where a construction vehicle 100 implements a construction action based on a measurement of the operating environment by the detection mechanism 110. The verification mechanism 150 records a measurement of the same geographic area measured by the detection mechanism 110 and where construction vehicle 100 implemented the determined construction action. The construction vehicle 100 then processes the recorded measurement to determine the result of the construction action. For example, the verification mechanism 150 may record an image of the geographic region surrounding a graded portion of land identified by the detection mechanism 110 and treated by a construction mechanism 120. The construction vehicle 100 may apply a detection algorithm to the recorded image to determine the result of the construction action.

Information recorded by the verification mechanism 150 can also be used to empirically determine operation parameters of the construction vehicle 100 that will obtain the desired effects of implemented construction actions (e.g., to calibrate the construction vehicle 100, to modify construction plans, etc.). For instance, the construction vehicle 100 may apply a calibration detection algorithm to a measurement recorded by the construction vehicle 100. In this case, the construction vehicle 100 determines whether the actual effects of an implemented construction action are the same as its intended effects. If the effects of the implemented construction action are different than its intended effects, the construction vehicle 100 may perform a calibration process. The calibration process changes operation parameters of the construction vehicle 100 such that effects of future implemented construction actions are the same as their intended effects. To illustrate, consider the previous example where the construction vehicle 100 recorded an image of an object in the construction site. There, the construction vehicle 100 may apply a calibration algorithm to the recorded image to determine whether the construction is appropriately calibrated (e.g., at its intended location in the operating environment). If the construction vehicle 100 determines that the construction vehicle 100 is not calibrated (e.g., the construction action resulted in some imprecision or inaccuracy), the construction vehicle 100 may calibrate itself such that future are in the correct location. Other example calibrations are also possible.

The verification mechanism 150 can have various configurations. For example, the verification mechanism 150 can be substantially similar (e.g., be the same type of mechanism as) the detection mechanism 110 or can be different from the detection mechanism 110. In some cases, the detection mechanism 110 and the verification mechanism 150 may be one in the same (e.g., the same sensor). In an example configuration, the verification mechanism 150 is positioned distal the detection mechanism 110 relative the direction of travel 115, and the construction mechanism 120 is positioned there between. In this configuration, the verification mechanism 150 traverses over a geographic location in the operating environment after the construction mechanism 120 and the detection mechanism 110. However, the mounting mechanism 140 can retain the relative positions of the system components in any other suitable configuration. In some configurations, the verification mechanism 150 can be included in other components of the construction vehicle 100.

The construction vehicle 100 can include any number or type of verification mechanism 150. In some embodiments, the verification mechanism 150 includes one or more sensors. For example, the verification mechanism 150 can include a multispectral camera, a stereo camera, a CCD camera, a single lens camera, a CMOS camera, hyperspectral imaging system, LIDAR system (light detection and ranging system), a depth sensing system, dynamometer, IR camera, thermal camera, humidity sensor, light sensor, temperature sensor, or any other suitable sensor. Further, the verification mechanism 150 may include an array of sensors (e.g., an array of cameras) configured to capture information about the environment surrounding the construction vehicle 100. For example, the verification mechanism 150 may include an array of cameras configured to capture an array of pictures representing the operating environment.

### Construction mechanism(s)

The construction vehicle 100 may include a construction mechanism 120. The construction mechanism 120 can implement construction actions in the operating environment of a construction vehicle 100. For instance, a construction vehicle 100 may include a construction mechanism 120 that performs one or more physical actions useful for accomplishing construction objectives, i.e., construction actions.

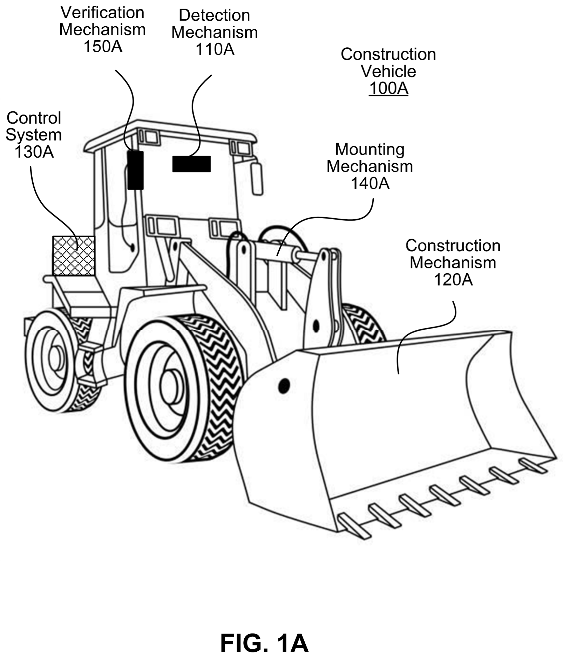

In the example of FIG. 1A, the construction mechanism 120A may be a bulldozer blade that is mounted to the vehicle with a mounting mechanism 140A. The mounting mechanism 140A may control action of the bulldozer blade, e.g., for performing various construction actions. The mounting mechanism 140A may further relay a configuration of the bulldozer blade, e.g., if the bulldozer blade is in contact with the ground and configured to displace material, the mounting mechanism 140A may relay that configuration to the control system 130A.

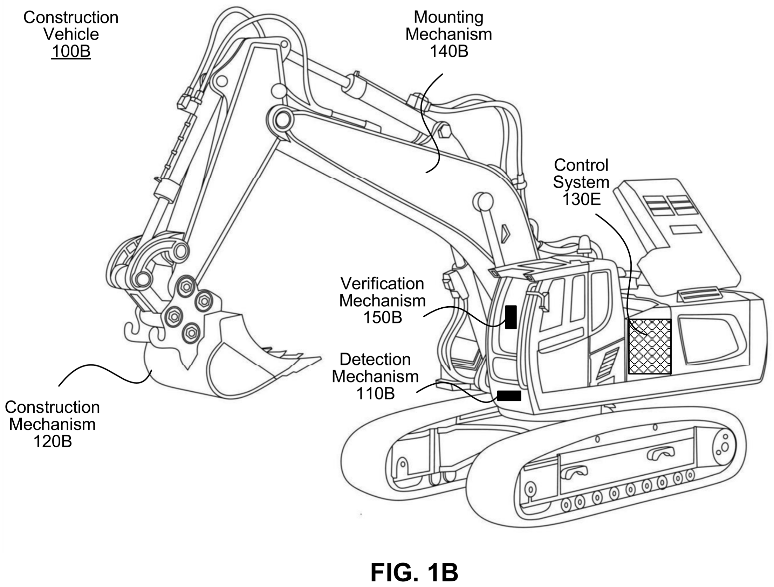

In the example of FIG. 1B, the construction mechanism 120B may be an excavating arm that is mounted to the vehicle with mounting mechanism 140B. The excavating arm may be controlled to excavate material and to unload the material, e.g., onto the bed of dump truck. In the embodiment shown, the mounting mechanism 140B may include a number of pivot points, each with its own range of motion. The combination of pivot points and the various ranges of motion can position the excavating arm in a plurality of different positions. Each different position may be a different form factor.

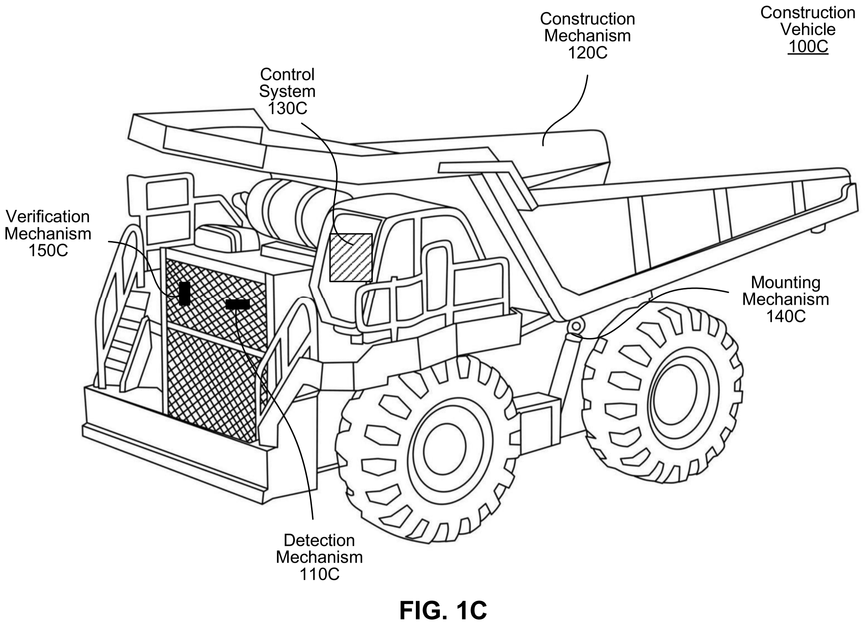

In the example of FIG. 1C, the construction mechanism 120C may be a bed that is mounted to the vehicle with mounting mechanism 140C. The bed can be raised or lowered with a piston of the mounting mechanism 140C, e.g., coupled to a fore end of the bed that is opposite the aft end of the bed, where material is unloaded. As the fore end is raised or lowered, an angle of the bed is adjusted to unload material via gravity.

The construction mechanism 120 may be used for different construction actions. For example, the construction vehicle 100 may identify and bulldoze a specific mound of material in the construction site. Alternatively, or additionally, the construction vehicle 100 may identify some foreign object and the construction mechanism 120 may be actuated to remove the foreign object.

Depending on the configuration, the construction vehicle 100 may include various numbers of construction mechanisms 120 (e.g., 1, 2, 5, 20, 60, etc.). A construction mechanism 120 may be fixed (e.g., statically coupled) to the mounting mechanism 140 or attached to the construction vehicle 100. Alternatively, or additionally, a construction mechanism 120 may movable (e.g., translatable, rotatable, etc.) on the construction vehicle 100. In one configuration, the construction vehicle 100 includes a single construction mechanism 120. In this case, the construction mechanism 120 may be actuatable to align the construction mechanism 120 to a particular position and/or orientation. In a second variation, the construction vehicle 100 includes a construction mechanism 120 assembly comprising an array of construction mechanisms 120. In this configuration, a construction mechanism 120 may be a single construction mechanism 120, a combination of construction mechanisms 120, or the construction mechanism 120 assembly. Thus, either a single construction mechanism 120, a combination of construction mechanisms 120, or the entire assembly may be selected for performing construction actions. Similarly, either the single, combination, or entire assembly may be actuated to align with a construction site, as needed. In some configurations, the construction vehicle 100 may align a construction mechanism 120 with an identified object in the operating environment. That is, the construction vehicle 100 may identify an object in the operating environment and actuate the construction mechanism 120 such that its construction site aligns with the identified object.

A construction mechanism 120 may be operable between a standby mode and a construction mode. In the standby mode the construction mechanism 120 does not apply a construction, and in the construction mode the construction mechanism 120 is controlled by the control system 130 to apply the construction. However, the construction mechanism 120 can be operable in any other suitable number of operation modes.

The configuration of the construction mechanism 120 may affect parameters of the virtual safety bubble. For example, the construction mechanism 120 may be collapsed in a compact configuration or deployed in an expanded configuration, and the control system generating the virtual safety bubble may automatically and/or dynamically adjust parameters of the safety bubble based on whether the construction mechanism 120 is in the collapsed configuration or the expanded configuration. In another example, the construction mechanism 120 may be operable for multiple construction actions. Based on the construction action, the control system may automatically and/or dynamically adjust parameters of the safety bubble.

### Control system(s)

The construction vehicle 100 includes a control system 130. The control system 130 controls operation of the various components and systems on the construction vehicle 100. For instance, the control system 130 can obtain information about the operating environment, processes that information to identify a construction action to implement, and implement the identified construction action with system components of the construction vehicle 100. The control system 130 may further aid in the navigation of the construction vehicle around the operating environment. Navigation may include collecting and analyzing data relating to the environment from one or more sensors and generating navigation instructions based on the data.

The control system 130 can receive information from the detection mechanism 110, the verification mechanism 150, the construction mechanism 120, and/or any other component or system of the construction vehicle 100. For example, the control system 130 may receive measurements from the detection mechanism 110 or verification mechanism 150, or information relating to the state of a construction mechanism 120 or implemented construction actions from a verification mechanism 150. Other information is also possible.

Similarly, the control system 130 can provide input to the detection mechanism 110, the verification mechanism 150, and/or the construction mechanism 120. For instance, the control system 130 may be configured input and control operating parameters of the construction vehicle 100 (e.g., speed, direction). Similarly, the control system 130 may be configured to input and control operating parameters of the detection mechanism 110 and/or verification mechanism 150. Operating parameters of the detection mechanism 110 and/or verification mechanism 150 may include processing time, location and/or angle of the detection mechanism 110, image capture intervals, image capture settings, etc. Other inputs are also possible. Finally, the control system may be configured to generate machine inputs for the construction mechanism 120. That is translating a construction action of a construction plan into machine instructions implementable by the construction mechanism 120.

The control system 130 can be operated by a user operating the construction vehicle 100, wholly or partially autonomously, operated by a user connected to the construction vehicle 100 by a network, or any combination of the above. For instance, the control system 130 may be operated by a construction manager sitting in a cabin of the construction vehicle 100, or the control system 130 may be operated by an construction manager connected to the control system 130 via a wireless network. In another example, the control system 130 may implement an array of control algorithms, machine vision algorithms, decision algorithms, etc. that allow it to operate autonomously or partially autonomously.

The control system 130 may be implemented by a computer or a system of distributed computers. The computers may be connected in various network environments. For example, the control system 130 may be a series of computers implemented on the construction vehicle 100 and connected by a local area network. In another example, the control system 130 may be a series of computers implemented on the construction vehicle 100, in the cloud, a client device and connected by a wireless area network.

The control system 130 can apply one or more computer models to determine and implement construction actions in the construction site. For example, the control system 130 can apply an object detection model to images acquired by the detection mechanism 110 to identify and classify objects in the sensor data. Based on the detected objects, the control system 130 may determine parameters for construction actions to be performed by the construction mechanism 120. The control system 130 may be coupled to the construction vehicle 100 such that an operator (e.g., a driver) can interact with the control system 130. In other embodiments, the control system 130 is physically removed from the construction vehicle 100 and communicates with system components (e.g., detection mechanism 110, construction mechanism 120, etc.) wirelessly.

In some configurations, the construction vehicle 100 may additionally include a communication apparatus, which functions to communicate (e.g., send and/or receive) data between the control system 130 and a set of remote devices. The communication apparatus can be a Wi-Fi communication system, a cellular communication system, a short-range communication system (e.g., Bluetooth, NFC, etc.), or any other suitable communication system.

### Other Machine Components

In various configurations, the construction vehicle 100 may include any number of additional components.

For instance, the construction vehicle 100 may include a mounting mechanism 140. The mounting mechanism 140 provides a mounting point for the components of the construction vehicle 100. That is, the mounting mechanism 140 may be a chassis or frame to which components of the construction vehicle 100 may be attached but could alternatively be any other suitable mounting mechanism 140. More generally, the mounting mechanism 140 statically retains and mechanically supports the positions of the detection mechanism 110, the construction mechanism 120, and the verification mechanism 150. In an example configuration, the mounting mechanism 140 extends outward from a body of the construction vehicle 100 such that the mounting mechanism 140 is approximately perpendicular to the direction of travel 115. In some configurations, the mounting mechanism 140 may include an array of construction mechanisms 120 positioned laterally along the mounting mechanism 140. In some configurations, the construction vehicle 100 may not include a mounting mechanism 140, the mounting mechanism 140 may be alternatively positioned, or the mounting mechanism 140 may be incorporated into any other component of the construction vehicle 100.

The construction vehicle 100 may include locomoting mechanisms. The locomoting mechanisms may include any number of wheels, continuous treads, articulating legs, or some other locomoting mechanism(s). For instance, the construction vehicle 100 may include a first set and a second set of coaxial wheels, or a first set and a second set of continuous treads. In the either example, the rotational axis of the first and second set of wheels/treads are approximately parallel. Further, each set is arranged along opposing sides of the construction vehicle 100. Typically, the locomoting mechanisms are attached to a drive mechanism that causes the locomoting mechanisms to translate the construction vehicle 100 through the operating environment. For instance, the construction vehicle 100 may include a drive train for rotating wheels or treads. In different configurations, the construction vehicle 100 may include any other suitable number or combination of locomoting mechanisms and drive mechanisms.

The construction vehicle 100 may also include one or more coupling mechanisms 142 (e.g., a hitch). The coupling mechanism 142 functions to removably or statically couple various components of the construction vehicle 100. For example, a coupling mechanism may attach a drive mechanism to a secondary component such that the secondary component is pulled behind the construction vehicle 100. In another example, a coupling mechanism may couple one or more construction mechanisms 120 to the construction vehicle 100.

The construction vehicle 100 may additionally include a power source, which functions to power the system components, including the detection mechanism 110, control system 130, and construction mechanism 120. The power source can be mounted to the mounting mechanism 140, can be removably coupled to the mounting mechanism 140, or can be incorporated into another system component (e.g., located on the drive mechanism). The power source can be a rechargeable power source (e.g., a set of rechargeable batteries), an energy harvesting power source (e.g., a solar system), a fuel consuming power source (e.g., a set of fuel cells or an internal combustion system), or any other suitable power source. In other configurations, the power source can be incorporated into any other component of the construction vehicle 100.

### III.B SYSTEM ENVIRONMENT

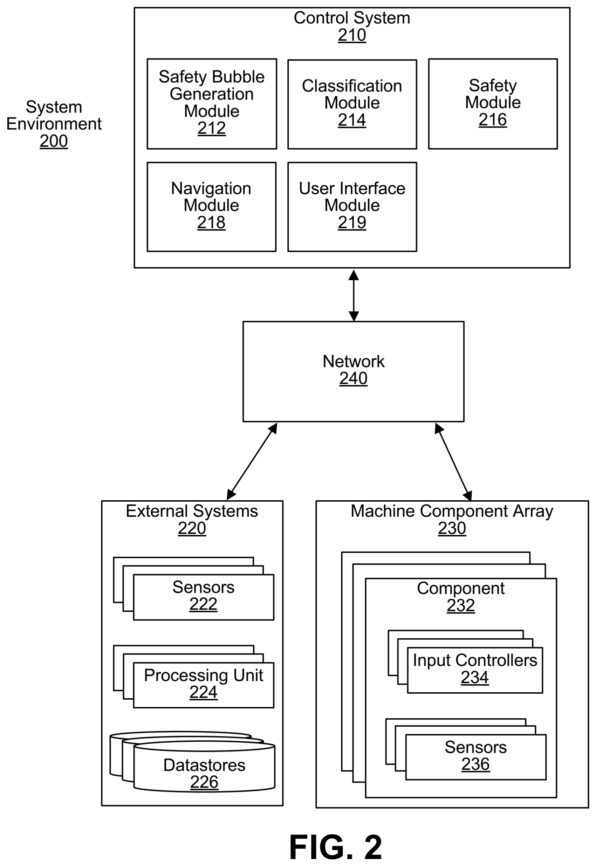

FIG. 2 is a block diagram of the system environment 200 for the construction vehicle 100, in accordance with one or more embodiments. In this example, the control system 210 (e.g., control system 130) is connected to external systems 220 and a machine component array 230 via a network 240 within the system environment 200.

The external systems 220 are any system that can generate data representing information useful for determining and implementing construction actions in a construction site. External systems 220 may include one or more sensors 222, one or more processing units 224, and one or more datastores 226. The one or more sensors 222 can measure the construction site, the operating environment, the construction vehicle 100, etc. and generate data representing those measurements. For instance, the sensors 222 may include a rainfall sensor, a wind sensor, heat sensor, a camera, etc. The processing units 2240 may process measured data to provide additional information that may aid in determining and implementing construction actions in the construction site. Datastores 226 store historical information regarding the construction vehicle 100, the operating environment, the construction site, etc. that may be beneficial in determining and implementing construction actions in the construction site. For instance, the datastore 226 may store results of previously implemented construction plans and construction actions for a construction site, a nearby construction site, and or the region. The historical information may have been obtained from one or more construction vehicles (i.e., measuring the result of a construction action from a first construction vehicle with the sensors of a second construction vehicle). Further, the datastore 226 may store results of specific construction actions in the construction site, or results of construction actions taken in nearby construction sites having similar characteristics. The datastore 226 may also store historical weather, flooding, construction site use, operations completed, operations scheduled, etc. for the construction site and the surrounding area. Finally, the datastores 226 may store any information measured by other components in the system environment 200.

The machine component array 230 includes one or more components 232. Components 222 are elements of the construction vehicle 100 that can take construction actions (e.g., a construction mechanism 120). As illustrated, each component has one or more input controllers 234 and one or more sensors 236, but a component may include only sensors 236 or only input controllers 234. An input controller 234 controls the function of the component 232. For example, an input controller 234 may receive machine commands via the network 240 and actuate the component 230 in response. A sensor 226 generates data representing measurements of the operating environment and provides that data to other systems and components within the system environment 200. The measurements may be of a component 232, the construction vehicle 100, the operating environment, etc. For example, a sensor 226 may measure a configuration or state of the component 222 (e.g., a setting, parameter, power load, etc.), measure conditions in the operating environment (e.g., moisture, temperature, etc.), capture information representing the operating environment (e.g., images, depth information, distance information), and generate data representing the measurement(s).

The control system 210 receives information from external systems 220 and the machine component array 230 and implements a construction plan in a construction site using a construction vehicle 100. Before implementing the construction plan, the construction vehicle verifies that it is safe to operate. To do so, the control system 210 receives a notification from a manager that the environment surrounding the construction vehicle is safe for operation and empty of obstacles. The control system 210 verifies, using captured images, that there are no obstacles in the environment surrounding the construction vehicle. The control system 210 generates a virtual safety bubble for the construction actions based on a configuration of the construction vehicle. While the construction vehicle is implementing the construction actions, the control system 210 continually identifies and locate obstacles in the environment. If one of the obstacles is within the virtual safety bubble, the control system 210 may stop operation or enact preventive measures.

The control system 210 includes a safety bubble generation module 212, a classification module 214, a safety module 216, a navigation module 218, and a user interface module 219. In other embodiments, the control system 210 has additional/fewer modules. In other embodiments, the modules may be variably configured such that functions of one may be performable by one or more other modules.

The safety bubble generation module 212 generates a virtual safety bubble for the construction vehicle 100. The virtual safety bubble may be a three-dimensional shape around the construction vehicle 100. In other embodiments, the virtual safety bubble may have a belt shape, e.g., a wall of certain height that surrounds the construction vehicle 100. Various other shapes and sizes may be envisioned. The safety bubble generation module 212 sets the shape and size of the virtual safety bubble based on the configuration of the construction vehicle 100. For example, the safety bubble generation module 212 may determine a shape and/or a size of the virtual safety bubble based on whether the construction vehicle 100 is in a first configuration for navigating to an operating environment or in a second configuration for performing a construction plan. The safety bubble generation module 212 may dynamically adjust the virtual safety bubble based on sensor data. For example, the safety bubble generation module 212 may increase the virtual safety bubble size in response to a sunset darkening the operating environment.

The classification module 214 classifies objects in the images captured by the cameras (embodiment of sensors 222) implemented on the construction vehicle100. The classification module 214 may utilize one or more models to classify pixels relating to objects the image. One model may identify obstacles as objects not part of the construction operation. For example, the model may classify rows of crop as non-obstacles but would classify a wild fox or a large boulder as an obstacle. Another model may perform image segmentation, classifying pixels for various object types, e.g., the ground, the sky, foliage, obstacles, etc. Yet another model may calculate a velocity of objects relative to the construction vehicle 100, e.g., using one or more visual odometry methods. And still another model may predict depth of the objects from the camera, e.g., utilizing a depth estimation model trained to predict the depth based on image data. Depth generally refers to the distance between the construction vehicle and pixels or objects in the images. For example, a first object present in an image can be determined to be at a depth of 5 meters from the construction vehicle. The classification module 214 may further generate 3D point cloud representations of objects within a virtual operating environment, allowing for tracking of objects. The various models may input other sensor data (captured by the sensors 222 or the sensors 236) to aid in the classification, e.g., LIDAR data, temperature measurements, etc.

The safety module 216 evaluates whether obstacles are within the virtual safety bubble. The safety module 216 may utilize a depth estimation model to predict depths of obstacles relative to the construction vehicle 100. If an obstacle has a depth that is below the virtual safety below, i.e., some portion of the obstacle breaks the barrier of virtual safety bubble, then the safety module 216 provides that notice to the navigation module 218, e.g., for ceasing operation or enacting preventive measures.

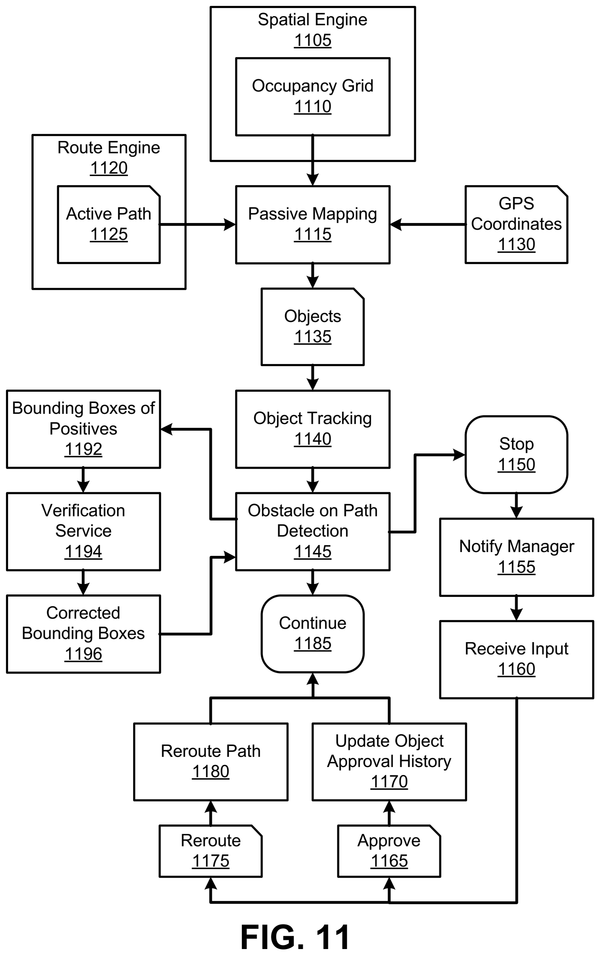

The navigation module 218 navigates the construction vehicle 100. The navigation module 218 generates navigation instructions based on a construction plan. The construction plan may include one or more construction operations to be completed. The navigation module 218 may chart a route to navigate the vehicle. The navigation module 218 may adjust the navigation route based on sensor data. The navigation module 218 may receive notices from the safety module 216 that an obstacle has breached the virtual safety bubble. In response to the notice, the navigation module 218 may cease operations, enact other preventive measures, or some combination thereof. In one example of a prevent measure, the navigation module 218 can bring the construction vehicle 100 to a stop when notice is given that an obstacle has breached the virtual safety bubble. As another example of a prevent measure, the navigation module 218 can chart a route around the obstacle to prevent collision. Additional details relating to navigation by the navigation module 218 is described in FIGs. 11-18

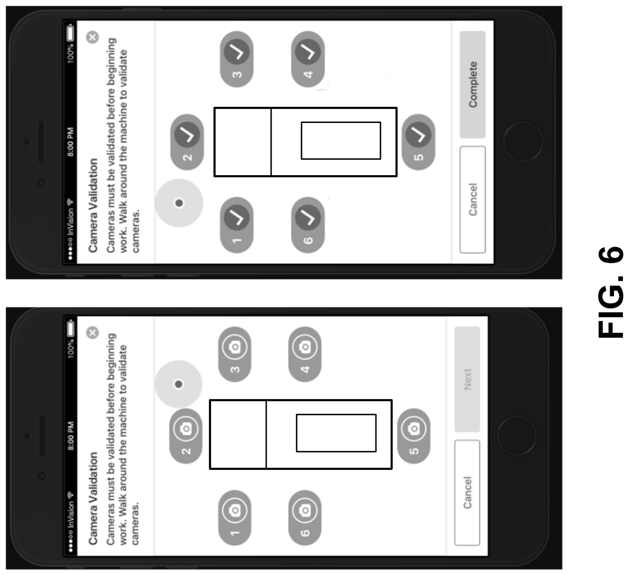

The user interface module 219 maintains a graphical user interface (GUI) for displaying information to the manager of the construction vehicle 100 and receiving inputs from the manager. The user interface module 219 may graphically illustrate the construction vehicle 100 in operation, e.g., when moving along a path, or when performing one or more construction actions. The GUI may also display any obstacles or other objects in the operating environment. The GUI may further be configured to receive inputs to control the construction vehicle 100. Example inputs include toggling a speed to the construction vehicle 100, manual adjustment of the virtual safety bubble, etc. In one embodiment, the GUI may notify a manager of the construction vehicle 100 that an obstacle has breached the virtual safety bubble, the GUI may request action or input from the manage in how to respond. Example user interfaces are further described in FIGs. 6-10.

In one or more embodiments, the models used by the control system 110 may be trained as machine-learning models using training data. The training may be supervised, unsupervised, or semi-supervised. Various types of machine-learning model architectures may be implemented, e.g., neural networks, decision trees, support vector machine learning, etc.

The network 240 connects nodes of the system environment 200 to allow microcontrollers and devices to communicate with each other. In some embodiments, the components are connected within the network as a Controller Area Network (CAN). In this case, within the network each element has an input and output connection, and the network 250 can translate information between the various elements. For example, the network 250 receives input information from the camera array 210 and component array 220, processes the information, and transmits the information to the control system 230. The control system 230 generates a construction action based on the information and transmits instructions to implement the construction action to the appropriate component(s) 222 of the component array 220.

Additionally, the system environment 200 may be other types of network environments and include other networks, or a combination of network environments with several networks. For example, the system environment 200, can be a network such as the Internet, a LAN, a MAN, a WAN, a mobile wired or wireless network, a private network, a virtual private network, a direct communication line, and the like.

### IV. OBSTRUCTED VIEWS AND UNOBSTRUCTED VIEWS

As described above, a construction vehicle is configured with one or more detection mechanisms ("detection system") to measure the environment. In one configuration the detection system may be an array of detection mechanisms configured to capture images of the environment. Image data in the image represent the various objects in the environment surrounding the construction vehicle. Thus, the detection system is configured to capture image data of the environment.

The detection system has a construction site of view, and because the detection system is an array of detection mechanisms, the detection system's construction site of view may comprise of several construction sites of view that may be composited together to form a 360-degree view. That is, each detection mechanism has its own construction site of view, and the construction sites of view, in aggregate, form the construction site of view of the detection system.

There may be one or more blind spots in a construction site of view caused by the configuration of the detection system. Some blind spots can include areas outside of reach of any detection mechanism and obstructed views, e.g., views within the construction site of view of the detection system but obstructed by one or more objects. Obstructed views comprise image data in images where an object obstructs an object or objects behind it (such that obstructed objects are obscured from view). Unobstructed views comprise image data in images where no objects obstruct an object or objects behind it. For example, consider a detection mechanism capturing images of a tire coupled to the construction vehicle and the surrounding environment. Because the tire is obscuring image data of objects behind the tire (e.g., ground, rocks, etc.) it is an obstructed view. The remainder of the image is an unobstructed view because there are no objects obscuring other objects.

Obstructed views are problematic in autonomous construction due to their inherent safety issues. For example, an object that may be a significant obstacle may be obscured by another object in an obstructed view. The construction vehicle may therefore be unable to identify and account for a problematic obstacle. Methods are presented herein to establish a virtual safety bubble to prevent obstacles from entering obstructed views of the construction vehicle.

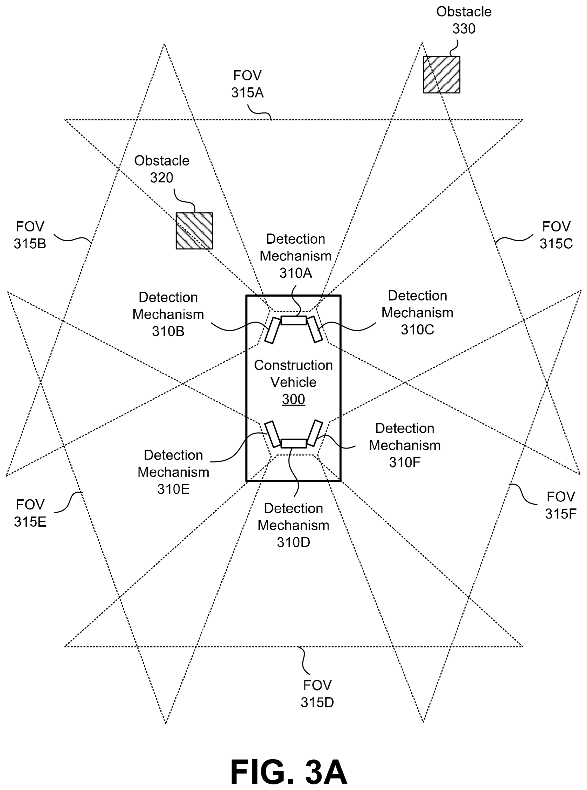

FIG. 3A illustrates a construction vehicle 300 (an embodiment of the construction vehicle 100) outfitted with a detection system. The construction vehicle 300 has a detection system with a total of six detection mechanisms 310. Three detection mechanisms 310A, 310B, and 310C are positioned on a front end of the construction vehicle 300, with the remaining three detection mechanisms 310D, 310E, 310F positioned on a back end of the construction vehicle 300 towards the implement 305. As noted above the detection system's construction site of view may aggregate the individual construction sites of view 315 from the detection mechanisms. Detection mechanism 310A has construction site of view 315A. Detection mechanism 310B has construction site of view 315B. Detection mechanism 310C has construction site of view 315C. Detection mechanism 310D has construction site of view 315D. Detection mechanism 310E has construction site of view 315E. Detection mechanism 310F has construction site of view 315F.

FIG. 3A also illustrates two obstacles. The first obstacle 320 is just off the front-right tire of the construction vehicle. The second obstacle 330 is to the front right of the construction vehicle. The construction vehicle 300 is configured to apply an obstacle detection model to images captured by the detection mechanism to identify the obstacles in the environment. That is, the construction vehicle 300 employs the obstacle detection model to determine that pixels in images represent obstacles and locates the approximate location of those obstacles in the environment (e.g., by estimating depth).

As described above, the detection system of the construction vehicle 300 includes various blind spots. Blind spots are areas in the environment not visible by the construction vehicle because, for instance, a portion of the construction vehicle obstructs the view (e.g., behind a tire), or the detection mechanisms are nor positioned to capture that portion of the environment (e.g., under the tractor).

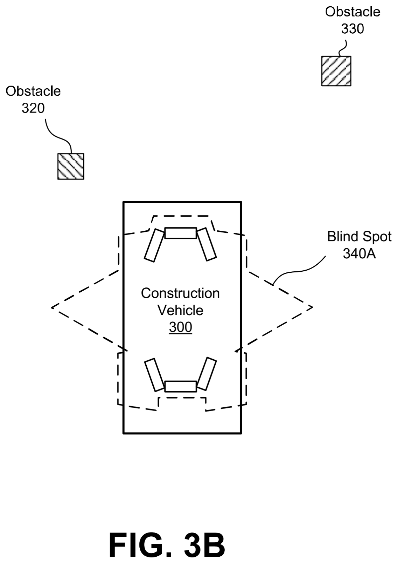

FIG. 3B illustrates one or more blind spots of the construction vehicle in FIG. 3A. The blind spots are indicated by polygons. The first blind spot 340A may be a combination of the footprint of the construction vehicle 300 (including vehicle frame, tires, other components obstructing views) and gaps between detection mechanisms (e.g., a gap on the left between detection mechanisms 310B and 310E and another gap on the right between detection mechanisms 310C and 310F). The second blind spot 340B may be an obstructed view caused by the construction implement 305 having some height blocking views .

FIG. 3B also illustrates the two obstacles. Here, the first obstacle 320 is partially in the blind spot 340A and the second obstacle 330 is in unobstructed view and within the construction site of view of the detection system. As such, when applying the obstacle detection model to images captured by the detection system, construction vehicle would not be able to identify and locate the first obstacle 320 but would be able to identify and locate the second obstacle 330.

### V. VERIFYING No OBSTACLES

The construction vehicle may be configured to only begin autonomously implementing construction actions if a manager of the construction vehicle verifies the environment. That is, a manager of the construction vehicle must verify that there are no obstacles in obstructed and/or unobstructed views of the construction vehicle. In essence, the manager must walk around the construction vehicle to verify that there are no obstacles in areas undetectable by the detection system. In some configurations, the verification process may include playing sirens and flashing lights to make it apparent that the construction vehicle is about to begin autonomously construction. The lights and sirens make it more likely that any humans in the environment will exit the environment.

As part of the verification process, the construction vehicle may communicate with a control system operated by the manager. That is, the construction vehicle may transmit and receive information from a control system operated by a manager. For example, the construction vehicle may transmit a request for the manager to verify the environment, and the construction vehicle may receive a verification of the environment in response (once the manager verifies the environment).

### VI. GENERATING A VIRTUAL SAFETY BUBBLE

The construction vehicle includes a virtual safety bubble generation module configured to generate a virtual safety bubble. A virtual safety bubble is an area in the environment which enables the construction vehicle to operate autonomously without colliding with obstacles. A virtual safety bubble may be an area in the environment (1) directly surrounding the construction vehicle, (2) in a forward path of the construction vehicle, (3) in a backward path from the construction vehicle, (4) along an expected path of the construction vehicle, and/or some area in the environment.

The construction vehicle generates the virtual safety bubble based on the configuration of the construction vehicle. Here, "configuration" is a term used to describe several aspects of the construction vehicle, implement, and environment which can be used to generate the virtual safety bubble. A non-exhaustive list of aspects of the construction vehicle configuration that may affect the virtual safety bubble follows.

Machine Path. The machine path may describe a current path of a machine or an expected path of the machine. The machine path may be in any direction relative to the current position of the construction vehicle. Additionally, the virtual safety bubble for the machine path may consider machine characteristics of the construction vehicle. E.g., the virtual safety bubble for a large construction vehicle along its machine path is larger than that of a smaller construction vehicle.

Vehicle Type. The vehicle type indicates one of a plurality of different vehicles in operation at the construction site. For example, the vehicle type may be selected from: bulldozer, paver, roller, dump truck, excavator, crane, cold miller, etc.

Construction Mechanism Configuration. The configuration of the construction mechanism indicates a state of the construction mechanism. For example, the configuration may indicate a position and/or orientation of one or more parts of construction mechanism. The configuration may indicate whether the construction mechanism is actuated or not.

Velocity. Velocity may be a current or scheduled velocity of the construction vehicle. As implemented by the construction vehicle, velocity may be a scalar or a vector.

Acceleration. Acceleration be a current or scheduled accretion of the construction vehicle. As implemented by the construction vehicle, acceleration may be a scalar or a vector.

Expected Obstacle Characteristics. Expected obstacle characteristics are characteristics of obstacles a construction vehicle may expect to find in its environment. For instance, a construction vehicle operating near building may expect to find different obstacles than one operating in a construction site. As such, each environment may have correspondingly different virtual safety bubbles.

Implement Type. Implement type is the type of implement being employed by the construction vehicle (if any). As an example, an implement may be some component for performing a construction action that can be coupled and/or decoupled from the vechicle.

Mounting Mechanism Type. Mounting mechanism type describes how various parts of the construction vehicle are attached to the structure. For instance, a mounting mechanism may be a hitch, and the hitch may be a mobile hitch or a static hitch. Accordingly, the type of mounting mechanism may indicate parameters for the virtual safety bubble.

Type of Construction Actions. Construction actions are described in detail above. Different construction actions may indicate different parameters for the virtual safety bubble. For instance, a virtual safety bubble for bulldozing may be different than a virtual safety bubble for grading a construction site. The construction vehicle's control system may determine a direction that a construction action would face to aid in determination of the parameters of the virtual safety bubble (e.g., the shape and the size of the virtual safety bubble). For example, the control system can set a shape of the virtual safety bubble to be predominantly in front of the construction vehicle based on the construction action. In another example, the control system can set a shape of the virtual safety bubble with a radius around the construction mechanism excavating. The control system may also access a physical configuration of the construction vehicle based on the construction action being performed, e.g., a first construction action may place the construction vehicle in a first physical configuration, whereas a second construction action may place the construction vehicle in a second physical configuration that is different than the first physical configuration.

Implementation Characteristics for Construction Actions. Implementation characteristics describes the particulars of how a construction vehicle implements a construction action. Some characteristics may include, for example, dimensionality of a dump truck's bed, dimensionality of an excavator's excavation arm, etc.

Machine Characteristics for Construction Vehicle. Machine characteristics describe the physical manifestation of the construction vehicle. That is, the size, shape, weight, and spatial characteristics of the construction vehicle. The construction vehicle may store a digital representation of its machine characteristics that may be accessed when generating a virtual safety bubble.

Implement Characteristics for Implement. Implement characteristics describe the physical manifestation of the construction implement. That is, the size, shape, and spatial characteristics of the construction implement. The construction implement may store a digital representation of its implement characteristics that may be accessed when generating a virtual safety bubble.

Characteristics of Other Attachments. Other attachments may include any one component that is attached to the construction vehicle or implement. For example, the construction vehicle can be rigged with additional flood lights which may expand the dimensional profile of the construction vehicle.

Environment Characteristics. Environment characteristics describes the working environment of the construction vehicle. Some example environment characteristics include the size, shape, and spatial characteristics of the construction site in which the construction vehicle operates. Environment characteristics may also describe the weather.

Obstacle Type. Obstacles may be dynamic (i.e., moving) or static (i.e., unmoving). The obstacle type may further classify, e.g., between humans or non-humans, between construction equipment, etc. The construction vehicle may generate a different virtual safety bubble for an identified dynamic and/or static obstacle.

Manager Input. Manager input is information from the manager that may be used to generate a virtual safety bubble. Manager input may include any of the aforementioned configuration information.

Local Regulations. The control system can maintain a log of different local regulations depending on a geographical location of the construction vehicle. In one or more examples, a first country may have different regulations than a second country; a first state may have different regulations than a second state; a first city may have different regulations than a second city; or some combination thereof. The different regulations can limit the construction actions, e.g., speed limit, permitted period of operation, permitted weather for operation, other regulations, etc.

To refresh, the construction vehicle utilizes a machine configuration to determine a virtual safety bubble around the construction vehicle. The machine configuration may be any of the aforementioned configuration information. The virtual safety bubble may be represented as a relative distance, an absolute distance, a depth, a time (e.g., based on velocity and/or acceleration), legal requirements, or any other suitable metric for quantifying the virtual safety bubble.

The construction vehicle continually monitors the environment such that no obstacles are within the virtual safety bubble. That is, the detection mechanisms capture images, the construction vehicle applies an obstacle identification model to the images and identifies and locates an obstacle in the environment. If the construction vehicle identifies an obstacle in the virtual safety bubble, it terminates operation of the construction vehicle.

Notably, the construction vehicle may treat obstacles and objects in different manners. For instance, a construction vehicle may identify a large pile of leaves in a virtual safety bubble, identify it as an object, and continue performing construction actions because the leaves would not damage the construction vehicle on contact. To the contrary, a construction vehicle may identify a log in a virtual safety bubble, identify it as an object, classify it as an obstacle, and cease performing construction actions because the log would damage the construction vehicle in a collision.

In some examples, the construction vehicle may treat different types of obstacles in different manners. For instance, a dynamic obstacle (e.g., a human, a moving car, etc.) may warrant different virtual safety bubbles relative to a static obstacle (e.g., a log, a chair, etc.). Naturally, dynamic obstacles likely indicate larger virtual safety bubbles because of their ability to move through the environment, while static obstacles likely indicate smaller virtual safety bubbles because they remain stationary. In some examples, the construction vehicle may treat humans in a different manner than all other obstacles. For instance, the construction vehicle may generate a virtual safety bubble for humans that is larger than all other objects and obstacles. In one or more embodiments, the construction vehicle may generate a plurality of virtual safety bubbles utilized concurrently. A first virtual safety bubble may be defined for a first class of objects (e.g., humans), and a second virtual safety bubble may be defined for a second class of objects (e.g., obstacles).

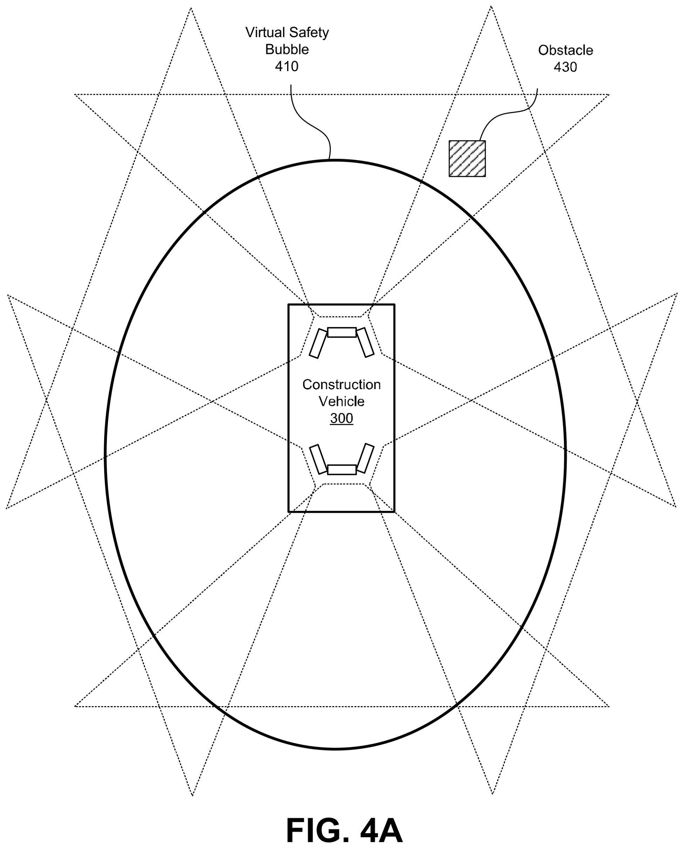

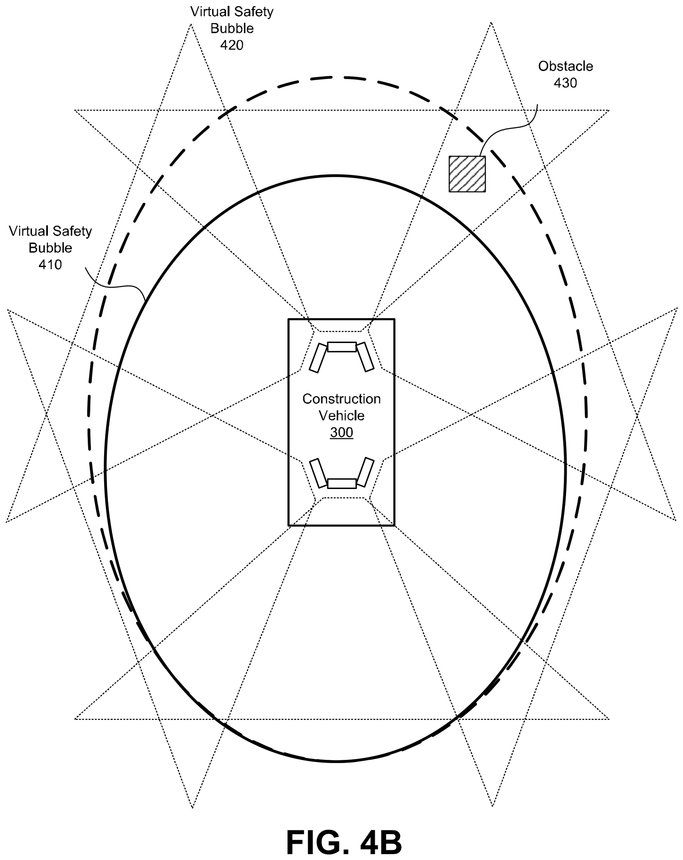

FIG. 4A and 4B illustrate dynamically modifying the virtual safety bubble around a construction vehicle. In FIGs. 4A & 4B, the construction vehicle is similarly configured to the construction vehicle in FIG. 3A, having a detection system comprising at least six detection mechanisms compositing construction sites of view to create the 360-degree construction site of view all around the construction vehicle.

FIG. 4A illustrates a first virtual safety bubble 420 around a construction vehicle, in accordance with one or more embodiments. The construction vehicle is autonomously implementing construction actions in the environment (e.g., grading, excavating, loading/unloading, etc.) using a particular configuration. The configuration of the construction vehicle describes its spatial characteristics (e.g., positions of tires, implements, etc.), the construction actions to implement, and the implementation characteristics for those construction actions (e.g., type, path, velocity, acceleration, implementation settings, etc.).

Based on the configuration, the construction vehicle determines a virtual safety bubble 420. The virtual safety bubble 420 is represented by the oval surrounding the construction vehicle. The virtual safety bubble 420 represents a safe operational area where there are no identified obstacles. To maintain the virtual safety bubble 420, the construction vehicle continuously captures images and applies an obstacle detection model to locate obstacles in the environment. If the construction vehicle detects an obstacle 430 in the virtual safety bubble 420 the construction vehicle may terminate operation. That is, the construction vehicle ceases implementation of construction actions and may cease movement. Implementing the virtual safety bubble beyond the blind spots prevents any obstacle from being obscured and missed by the detection system, which could cause a collision and damage to the construction vehicle, object, or individual.

FIG. 4B illustrates dynamically modifying the virtual safety bubble around a construction vehicle, in accordance with one or more embodiments. To illustrate, imagine that the construction actions implemented by the construction vehicle in FIG. 4A are performed with a first configuration with the virtual safety bubble 410. For example, the construction vehicle is performing construction actions at a first velocity in the environment. Now consider, for example, the construction vehicle changes its configuration. For example, the manager instructs the construction vehicle to travel more quickly in the environment as it implements construction actions. As another example, the construction vehicle enters an environment populated with cattle or other animals. The construction vehicle may change from the first configuration to a second configuration, creating a larger virtual safety bubble.

The construction vehicle calculates a new virtual safety bubble 420 to account for the second configuration. The new virtual safety bubble 420 is illustrated by the dashed oval in FIG. 4B. Notably, the new virtual safety bubble 420 is larger than the original virtual safety bubble, e.g., to account for the construction vehicle's higher velocity. This larger virtual safety bubble 420 may be generated for several reasons, one of which is to allow for the greater time required for implementing a corrective action when an obstacle is detected due to a higher speed.

To illustrate, recall the obstacle 430 in FIG. 4A. There, the obstacle 430 was outside the virtual safety bubble 410 and the construction vehicle would not cease operations. In FIB. 4B the construction vehicle is moving faster. If the new virtual safety bubble 420 was the same size as the original virtual safety bubble 410, the construction vehicle may collide with the obstacle 430 before it can take corrective action. However, because the virtual safety bubble 420 is larger than the original virtual safety bubble 410, the construction vehicle identifies the obstacle 430 and may take corrective action before colliding with the obstacle 430.

In one or more embodiments, the control system 130 may generate a dynamic safety bubble. The dynamic safety bubble is modified based on the configuration of the construction vehicle 100. For example, the control system 130 creates a larger safety bubble for a faster moving construction vehicle 100 compared a smaller safety bubble for a slower moving construction vehicle. In other examples, if visibility of the detection mechanism 140 is limited, the control system 130 may increase a size of the safety bubble to proceed in a safer manner. In one or more examples, if the visibility of the detection mechanism 110 is severely hampered, the control system 130 may increase the safety bubble to a very large size (e.g., up to an infinitely-sized bubble).

In one or more embodiments, as the construction vehicle 100 is actuating a constructing mechanism 120, the control system 130 may dynamically modify the safety bubble. For example, with an excavator, a top portion (e.g., a cab) is rotatable about a motor assembly (e.g., the bottom rollers). The top portion may include the mounting mechanism 140 attaching the construction mechanism 120 to the vehicle. Given the rotatability of the top portion, the position of the construction mechanism 120 relative to the bottom portion (i.e., the direction of travel) is dynamic. Accordingly, the silhouette of the excavator when moving along the direction of travel is based on part on the orientation of the top portion relative to the bottom portion. The control system 130 may account for these positional configurations in generating the safety bubble, e.g., such that the excavator arm may affect a certain dimensionality of the safety bubble in conjunction with the direct of travel affecting the dimensionality of the safety bubble.

In one or more embodiments, the control system 130 may dynamically adjust the safety bubble based on dynamic characteristics of the vehicle 100. For example, a dump truck is loaded with construction material to be moved. Based on the load, the dump truck may leverage an onboard weighing system to determine the weight of the load, a distribution of the weight across the vehicle 100, a center of gravity or mass, or some combination thereof. The onboard weighing system may include one or more load sensors coupled to a bed of the vehicle 100, and configured to quantify a load (e.g., mass or weight) on the bed of the vehicle 100. The control system 130 may further leverage a kinematic model to update kinematic properties of the vehicle 100. For example, the dump truck has a bigger minimum stopping distance when hauling than when not hauling. The minimum stopping distance may be predicted by the kinematic model based on the weight of the haul. The control system 130 may further adjust autonomous operation of the vehicle based on the kinematic model, e.g., to set a maximum speed of the vehicle 100, which may be different when hauling and when not hauling. For example, based on the weight of a load and/or a weight distribution of the load, as sensed by the onboard weighing system, the control system 130 may constrain a maximum turning speed of the vehicle 100. In one or more embodiments, the control system 130 may communicate (e.g., wirelessly) with another control system 130 of another vehicle 100 interacting the current vehicle 100. Information on the construction action being performed by the other vehicle 100 can directly or indirectly influence the configuration of the present vehicle 100. For example, an excavator loading some material onto a hauling vehicle can transmit information on the load to the hauling vehicle. The control system 130 of the present vehicle 100 may aggregate information from the other vehicles 100 and its own sensors to refine the kinematic model according to its present configuration.

In one or more embodiments, the control system 130 may leverage sensor data to determine environmental parameters for dynamic adjustment of the virtual safety bubble. The control system 130 may leverage a slip sensor to identify any portions of a track in the construction site that subject the vehicle to slippage. The control system 130 may track the environmental parameters on a map (e.g., a local or a global map). At each pass, the control system 130 may further update the parameters. For example, a sloped track would affect the kinematics of the vehicle, such that the control system 130 can dynamically adjust the safety bubble dimensionality to account for the kinematics affected by the environmental parameters. The control system 130 may further adjust autonomous operation of the vehicle based on the environmental parameters, e.g., to set a maximum speed of the vehicle 100 based on the environmental parameters affecting the kinematics of the vehicle 100. Other sensors that may be leveraged in measuring environmental parameters include wheel sensors, tire pressure sensors, an anti-lock braking system (ABS) sensor, an IMU sensor, etc.

In one or more embodiments, the control system 130 may generate and/or update a map of the construction site with sensed environmental parameters by the vehicle 100. The map may be updated collaboratively by one or more control systems 130 of different vehicles 100. The information stored in the map may be transmitted to the control systems 130 of other vehicles 100 for providing up-to-date information on the environmental parameters. Accordingly, the control system 130 may also pull information from the global map to update a kinematic model for the present configuration of the vehicle 100 and the present environmental parameters.

In some embodiments, the control system 130 may generate a plurality of safety bubbles for use in conjunction. Each safety bubble may be sized and/or shaped differently. The control system 130 may further accompany different logic with each safety bubble. For example, if any obstacle breaches one particular safety bubble, the autonomous operation may be terminated or paused, whereas, for another safety bubble, an audible notification is presented by the vehicle (e.g., via a speaker) to caution those that may be in the environment around the construction vehicle 100. In another embodiment, one safety bubble may be accompanied with logic to modify operation of the construction vehicle 100 based on an identified object breaching the safety bubble.

In some embodiments, the control system 130 may determine proximity of an object to a safety bubble. If the object is within a threshold proximity, the control system 130 may enact logic to modify operation of the construction vehicle 100. For example, if there's an object that is within one meter of the safety bubble, the control system 130 may decelerate the construction vehicle. The control system 130 may determine the amount of deceleration based on the behavior of the object. For example, the control system 130 may determine a velocity and/or trajectory of the object. Based on the velocity and/or the trajectory, the control system 130 may control movement of the construction vehicle 100, e.g., to prevent the object from colliding with the vehicle and/or breaching a safety bubble.

In one or more embodiments, the control system 130 may leverage logic for performing different remedial actions in response to a breached safety bubble. In one or more embodiments, the control system 130 may terminate autonomous operation of the construction vehicle 100, e.g., by enacting control signals to decelerate any autonomous movement of the construction vehicle 100 to a standstill. In other embodiments, the control system 130 may identify behavior of the object or obstacle breaching the safety bubble to enact remedial actions, e.g., enacting control signals for collision avoidance. In some embodiments, the control system 130 may determine whether the object breaching the safety bubble has been previously permitted to breach the safety bubble. For example, in a construction site with a plurality of vehicles in operation conjunctively, the control system 130 may identify the other vehicles from the sensor data, and tag the identified vehicles with permissions for breaching the safety bubble without terminating operation. In such embodiments, the control system 130 may enact different logic for different classes of objects identified as breaching the safety bubble. This can be advantageous, for example, when vehicles pass by one another on a common track or route.

This can be also be advantageous, for example, when two or more vehicles interact with one another in performing a construction action. For example, a bulldozer or an excavator hoists material to be loaded onto a dump truck. In such embodiments, the bulldozer's safety bubble may be permissive to the dump truck breaching the safety bubble, without terminating autonomous operation. In such embodiments, the control system 130 of each vehicle may wirelessly communicate with the control system 130 of the other vehicle to aid in the identification of such permissive safety bubble breach. For example, the control system 130 of one vehicle may provide a signal identifying the vehicle to another control system 130 of another vehicle. In other embodiments, the control system 130 may leverage information by a global planner in networked communication with the various vehicles. For example, the global planner may track position and configurations for a fleet of vehicles. The tracked positions can be transmitted to each vehicle's control system 130 for identifying permissive breaches.

In one or more embodiments, the control system 130 may further predict and/or track a resultant change to the environment based on a construction action being or to be performed. For example, the detection mechanism 120 may provide sensor data relating to a structure subject to the construction action of bulldozing. The control system 130 may generate a safety bubble around the structure to be bulldozed, based on the expected resultant change to the environment that would be caused by the construction action. In another example, an excavator may be tasked with placement of an object. The control system 130 may generate a safety bubble around an expected position of the object placement, i.e., a resultant change to the environment.

### VII EXEMPLARY DYNAMIC SAFETY BUBBLE WORKFLOW

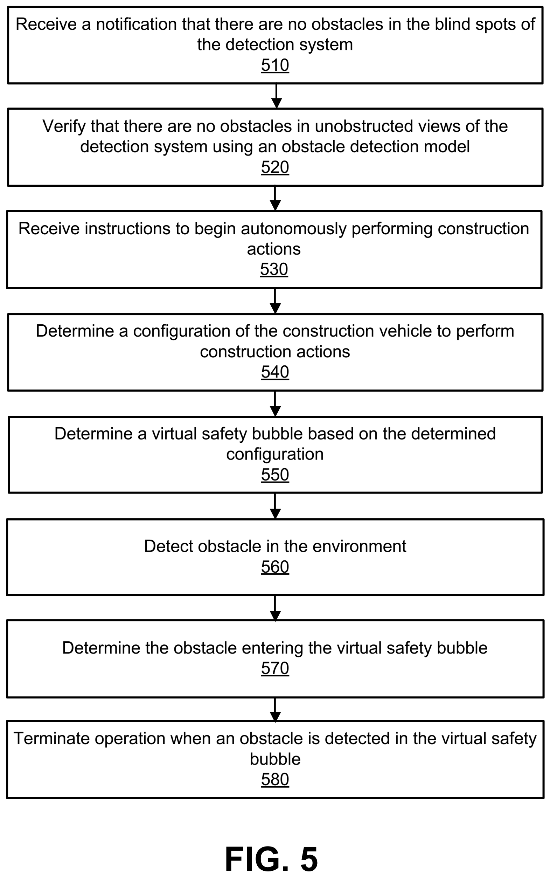

The construction vehicle may be configured to generate a virtual safety bubble around the construction vehicle that allows for safe, autonomous implementation of construction actions. FIG. 5 illustrates a process flow for generating a virtual safety bubble, according to one example embodiment. Although FIG. 5 is described from the perspective of the construction vehicle, any component of the construction vehicle may perform one or more of the steps (e.g., the control system 130 or 210). In other embodiments, there may be additional or fewer steps. In other embodiments, the steps listed may occur in a different order.

To provide context, an autonomous construction vehicle is configured with a detection system. The detection system may comprise six cameras positioned around the construction vehicle that provide the construction vehicle a 360-degree construction site view of the environment. Within the construction site of view are obstructed views and unobstructed views. Obstructed views are image data within the construction site of view where an object in the environment obscures portions of the environment behind the object from the detection mechanism (e.g., behind a tire, or under the cab). Unobstructed views are image data within the construction site of view that are not obstructed.

The construction vehicle receives a notification to begin autonomously implementing construction actions in the environment. In response, the construction vehicle transmits a request to verify that the operating environment of the construction vehicle is safe. Verification may include transmitting a notification to the manager to verify that there are no obstacles in the obstructed views of the detection system. The manager verifies that there are no obstacles and transmits a notification to the construction vehicle reflecting the verification.

The construction vehicle receives 510 a notification that there are no obstacles in the blind spots of the detection system. The manager may provide such notification, e.g., via a GUI running on a mobile phone application.

The construction vehicle verifies 520 that there are no obstacles in the unobstructed views of the environment using an obstacle detection model. That is, the construction vehicle captures one or more images of the environment using the detection system and applies an obstacle detection model to the images. The obstacle detection model analyzes the images to determine whether any of the pixels in the image represent an obstacle.

The construction vehicle receives 530 instructions from the operator to begin autonomously performing construction actions in the construction site. In an example configuration, the construction vehicle may be unable to begin autonomous performance without a verification from the manager that there are no obstacles in the obstructed views and verifying (itself) that there are no obstacles in the unobstructed views.

The construction vehicle determines 540 a configuration of the construction vehicle to perform the prescribed construction actions in the environment. Determining the configuration may include accessing an implement capability, a computer model of the construction vehicle, types of construction actions, and implementation characteristics defining how the construction vehicle implements the construction actions (e.g., speed, path, etc.).

The construction vehicle determines 550 a virtual safety bubble based on the determined configuration. The virtual safety bubble represents an area surrounding the construction vehicle where, if an obstacle is detected in the area, the construction vehicle will cease operation. The virtual safety bubble may be a distance, a time, a depth, a relative position, or any other measure of a virtual safety bubble.

The construction vehicle detects 560 an obstacle in the environment based on applying the obstacle detection model to the images captured by the detection system. As the construction vehicle performs construction actions in the construction site the detection mechanism continuously captures images of the environment. Moreover, the construction vehicle continuously applies the obstacle detection model to the captured images to identify obstacles in the environment.

The construction vehicle determines 570 that an obstacle is within the virtual safety bubble. The construction vehicle may determine that the obstacle has breached the virtual safety bubble if a depth of the obstacle is at or below the virtual safety bubble. The depth may be determined via a detection and ranging sensor, or a depth estimation model applied to the images.

In response to determining that an obstacle is in the virtual safety bubble, the construction vehicle terminates 560 operation. That is, the construction vehicle stops implementing the construction actions in the construction site. In other embodiments, the construction vehicle may enact other preventive measures in response to detecting an obstacle having breached the virtual safety bubble.

### VIII. EXAMPLE INTERACTIONS WITH MANAGER

As described above the construction vehicle may interact with a manager when performing construction actions in the construction site. Some of these interactions may be keyed to when the construction vehicle detects an object in its virtual safety bubble. Once detected, the construction vehicle may transmit to, or receive information from, a manager of the construction vehicle. The construction vehicle may also transmit and receive information when establishing a virtual safety bubble around the construction vehicle. FIGs. 6-10 illustrate various examples of a client device interacting with a construction vehicle.

FIG. 6 illustrates a verification process of the detection systems of the construction vehicle. The verification process may include verifying that there are no obstacles visible in obstructed views of the construction vehicle. On the left panel, the GUI illustrates the construction vehicle and implement with six zones where the cameras are positioned and directed. The GUI prompts the manager to "walk around the machine to validate the cameras." As the manager physically walks around the construction vehicle, each of the detection mechanisms (e.g., cameras) may capture data that is used by the construction vehicle to validate the detection mechanisms' ability to detect the manager. The right panel shows a completed walk-around with checkmarks next to each detection mechanism (e.g., camera).

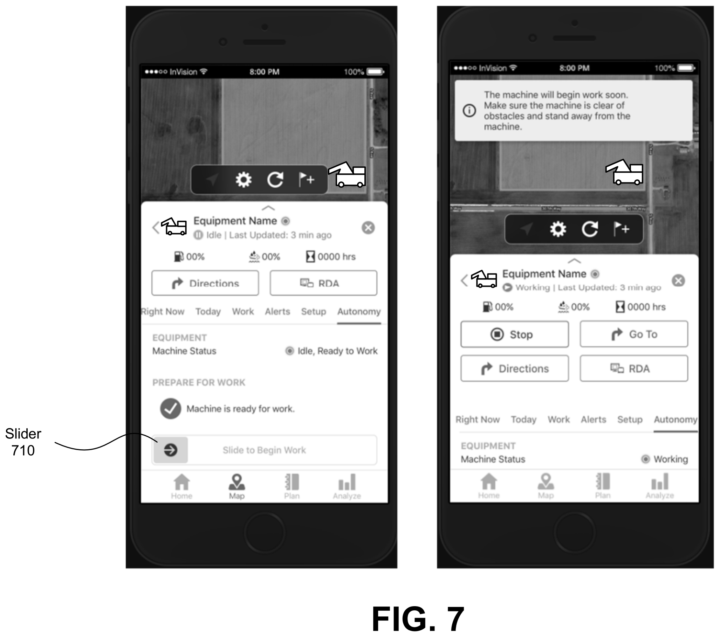

FIG. 7 illustrates a notification that the construction vehicle is establishing the virtual safety bubble. That is, once implemented, the virtual safety bubble will be maintained according to the methods described above. So, if a human or object enters the virtual safety bubble the construction vehicle may take corresponding actions as outlined above. The left panel shows a slider 710 that allows for a manager to engage the construction vehicle in the construction actions. Sliding the slider 710 to the right is an embodiment of step 530 in FIG. 5 of providing and receiving instructions to begin autonomously performing construction actions.

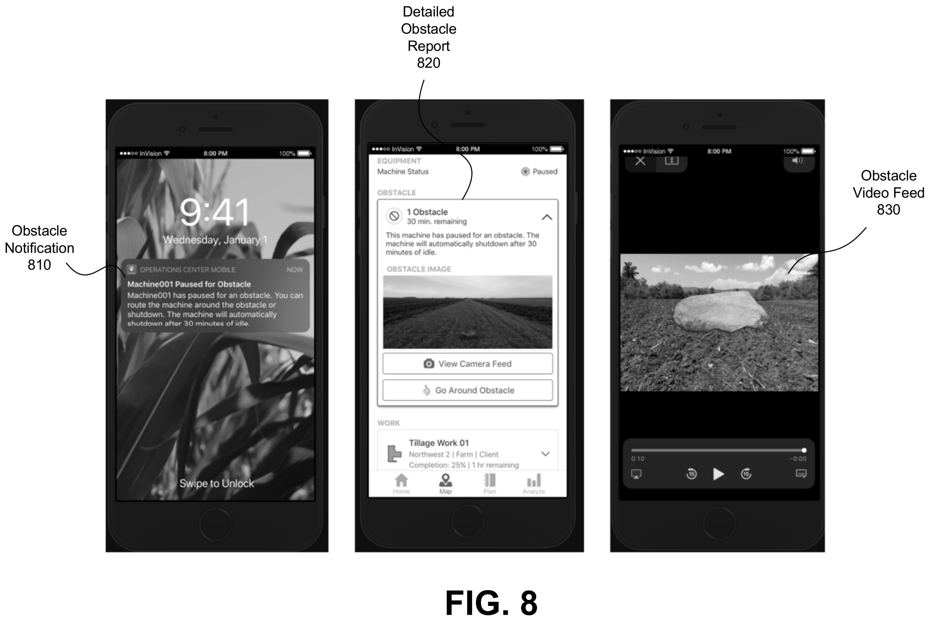

FIG. 8 illustrates a notification transmitted to a client device regarding a detected obstacle. The notification may occur when the object is detected within the virtual safety bubble. The notification may include characteristics describing the detected object. On the left panel, an obstacle notification 810 is shown as a pop-up notification on a mobile device. Upon receiving a click from the manager, the mobile application can expand to provide a detailed obstacle report 820, shown in the middle panel, providing additional details on the detected obstacle. The detailed obstacle report 820 may include an option to access an obstacle video feed 830 captured by a detection mechanism, shown in the right panel. The detailed obstacle report 820 can further include preventive measures that can be undertaken by the construction vehicle.

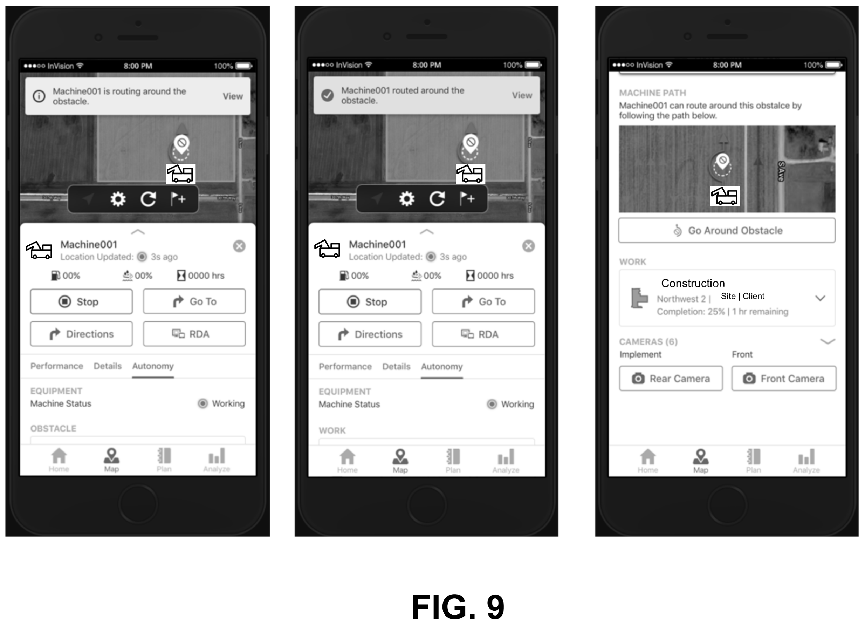

FIG. 9 illustrates actions the construction vehicle may implement when detecting an object in the virtual safety bubble. For example, the construction vehicle may route around the object in the construction site. The GUI can illustrate a route around the obstacle and progress of the construction vehicle in navigating the route, shown in the left panel. Upon completion of the route, the GUI can notify the manager of successful routing around the obstacle, shown in the middle panel. The right panel illustrates another example screenshot that illustrates an alternative route around an obstacle with an actionable option to instruct the construction vehicle to enact the prevent measure of navigating around the obstacle.

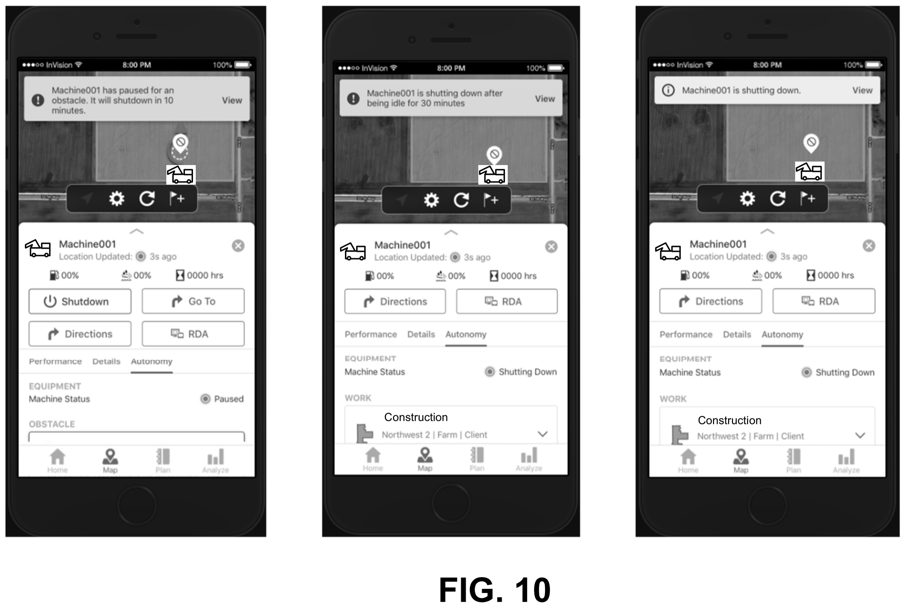

FIG. 10 illustrates actions the construction vehicle may implement when detecting an object in the virtual safety bubble. For example, the construction vehicle may cease operation in the construction site. In the left panel, the GUI illustrates that the construction vehicle has ceased operations (paused) in response to detection of an obstacle. In the middle panel, the GUI indicates the construction vehicle is shutting down after being "idle for 30 minutes" after having paused due to detecting the obstacle. In the right panel, the GUI indicates that the construction vehicle is "shutting down," e.g., switching to an inactive state.

### IX. EXEMPLARY NAVIGATIONAL WORKFLOW

FIG. 11 illustrates a navigational workflow 1100 of construction vehicle, in accordance with one or more embodiments. The construction vehicle may implement the control system 210 as described in FIG. 2. In other embodiments, the navigational workflow 1100 may include additional steps, fewer steps, steps in a different order, or some combination thereof. Although the following description is in the perspective of the control system 210, the construction vehicle at large may also perform the navigational workflow (e.g., via distributed systems in contrast to one control system).

The control system 210 begins by detecting objects in an operating environment of the construction vehicle. The control system 210 utilizes a spatial engine 1105 that generates an occupancy grid 1110. The occupancy grid 1110 is a virtual representation of the spatial environment of the construction vehicle. The control system 210 may further utilize a route engine 1120 that generates an active path 1125 for the construction vehicle to travel on. The controls system 210 may further receive GPS coordinates 1130, e.g., from a GPS receiver. The control system 210 performs passive mapping 1115, detecting objects 1135 in the environment of the construction vehicle. The control system 210 performs object tracking 1140, e.g., by constantly updating a position of an object relative to the construction vehicle within the occupancy grid 1110.

In one or more embodiments, the control system 210 may utilize object tracking 1140 to determine whether an object may have entered a blind spot. The control system 210 may track an object present in a plurality of images. Upon determining that the object has disappeared from view, i.e., no longer present in any of the images, the control system 210 may determine the object to have entered a blind spot. In other embodiments, the control system 210, knowing that an object is likely in a blind spot, may prompt a user to verify whether the object has been cleared or remains in the blind spot. In response to the user providing an input indicating the object has been cleared, then the control system 210 may continue 1185 operation. In response to the user providing an input indicating that the object remains in the blind spot, the control system 210 may reroute. The control system 210 may request further input from the manager via step 1155.

The control system 210 detects an obstacle on the active path 1145. As noted, the control system 210 may utilize a virtual safety bubble to detect when obstacles have breached the virtual safety bubble. In response to detecting the obstacle has breached the virtual safety bubble, the controls system 210 stops 1150 operations (or enact other preventive measures). The control system 210 notifies 1155 the manager of the obstacle in path (e.g., as shown in FIGs. 6-10). The control system 210 receives 1160 input from the manager, e.g., to approve 1165 of the object, i.e., to override object as not an obstacle, allowing for continued operation 1185. Otherwise, the manager may provide input to reroute 1175. In response, the control system 210 may reroute path 1180 around the obstacle. Once cleared, the controls system 210 can continue 1185 construction actions.

In one or more embodiments, the control system 210 can routinely update bounding boxes of the objects. The control system 210 can routinely evaluate whether a bounding box for an object is accurately defined for the object. If not accurately defined, the control system 210 may implement Verification Service 1194 to produce corrected bounding boxes 1196 for the various objects. Having accurate bounding boxes increases detect precision, i.e., when detecting the object breaches the virtual safety bubble.

### X. EXAMPLE NAVIGATIONAL SCENARIOS

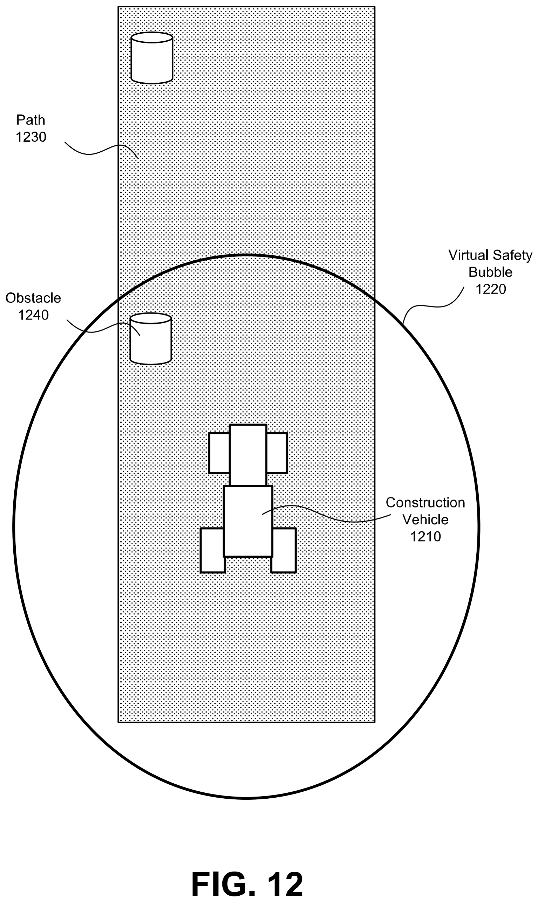

FIG. 12 illustrates navigation of a construction vehicle 1210 on-path on a straight path 1230, in accordance with one or more embodiments. The construction vehicle 1210 is an embodiment of the construction vehicle 100 comprising the control system 210. The construction vehicle 1210 generates the virtual safety bubble 1220 to aid navigation of the construction vehicle 1210. As the construction vehicle 1210 is driving on the path 1230 and encounters an obstacle 1240 (i.e., the obstacle 1240 breaches the virtual safety bubble 1220), then the construction vehicle 1210 may cease operations and/or enact other preventive measures.

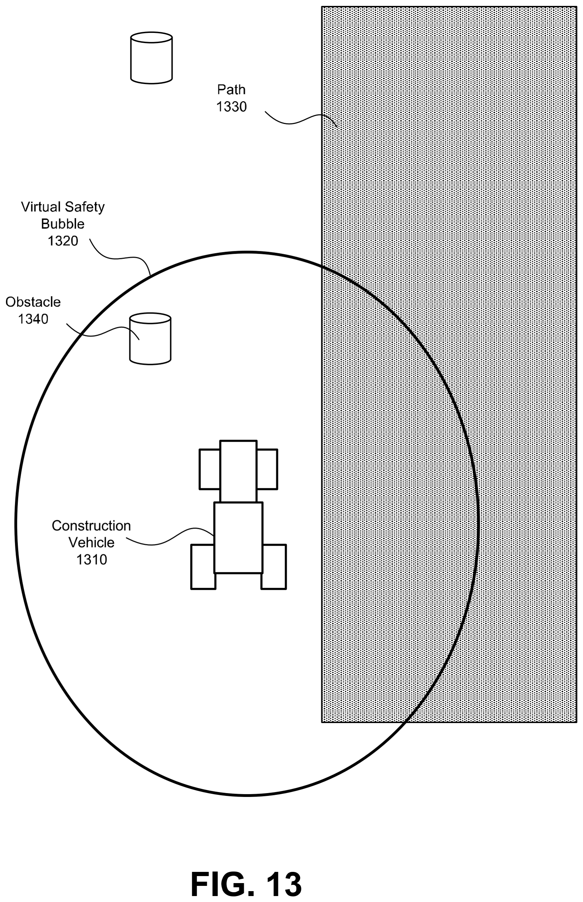

FIG. 13 illustrates navigation of a construction vehicle 1310 off-path on a straight path 1330, in accordance with one or more embodiments. The construction vehicle 1310 is an embodiment of the construction vehicle 100 comprising the control system 210. The construction vehicle 1310 generates the virtual safety bubble 1320 to aid navigation of the construction vehicle 1310. In this scenario, the construction vehicle 1310 is significantly off-path. If the construction vehicle 1310 determines that it is off-path, then the construction vehicle 1310 may generate course-correction navigation instructions to route the construction vehicle 1310 back onto the path 1330. The construction vehicle 1310 may also cease operations and/or provide a notification to a manager indicating that the construction vehicle 1310 is off-path, requesting subsequent instructions. Even when off-path, if the construction vehicle 1310 encounters an obstacle 1340 (i.e., the obstacle 1340 breaches the virtual safety bubble 1320), then the construction vehicle 1310 may cease operations and/or enact other preventive measures.

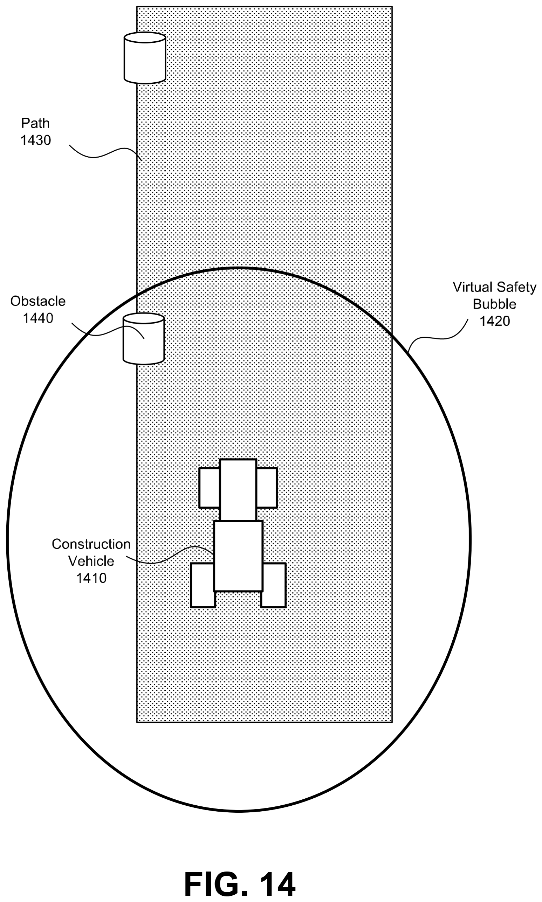

FIG. 14 illustrates navigation of a construction vehicle 1410 on-path and off-center of a straight path 1430, in accordance with one or more embodiments. The construction vehicle 1410 is an embodiment of the construction vehicle 100 comprising the control system 210. The construction vehicle 1410 generates the virtual safety bubble 1420 to aid navigation of the construction vehicle 1410. In this scenario, the construction vehicle 1410 is on-path but off-center. If the construction vehicle 1410 determines that it is off-center, then the construction vehicle 1410 may generate course-correction navigation instructions to route the construction vehicle 1410 back onto the center of the path 1430. Even when off-path, if the construction vehicle 1410 encounters an obstacle 1440 (i.e., the obstacle 1340 breaches the virtual safety bubble 1420), then the construction vehicle 1410 may cease operations and/or enact other preventive measures.

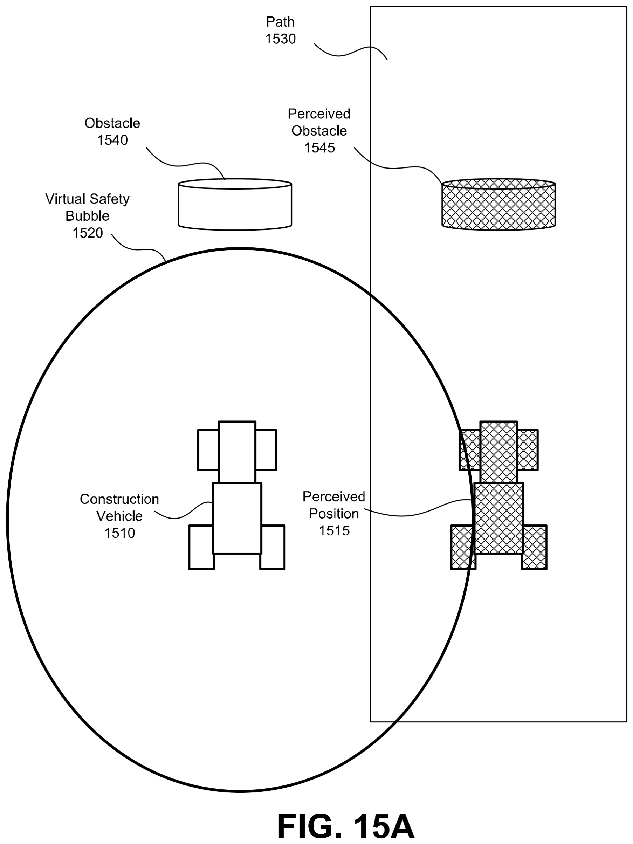

FIG. 15A illustrates navigation of a construction vehicle 1510 when off-path but perceived to be on-path, in accordance with one or more embodiments. The construction vehicle 1510 is an embodiment of the construction vehicle 100 comprising the control system 210. The construction vehicle 1510 may receive GPS coordinates such that a perceived position 1515 of the construction vehicle 1510 is on-path, i.e., on the path 1530. However, in fact, the construction vehicle 1510 is off-path. The construction vehicle 1510 utilizes the virtual safety bubble 1520, but will only enact preventive measures when the obstacle 1540 (which is off-path) enters the virtual safety bubble 1520. Obstacles that are on the actual path 1530 may not breach the virtual safety bubble 1520, such that the construction vehicle will continue operations. In some embodiments, the construction vehicle 1510 may received corrected GPS coordinates locating the construction vehicle 1510 off-path, although previously perceived to be on-path, at which point, the construction vehicle 1510 may generate and enact course-correction navigation to navigate the construction vehicle 1510 back onto the path 1530.

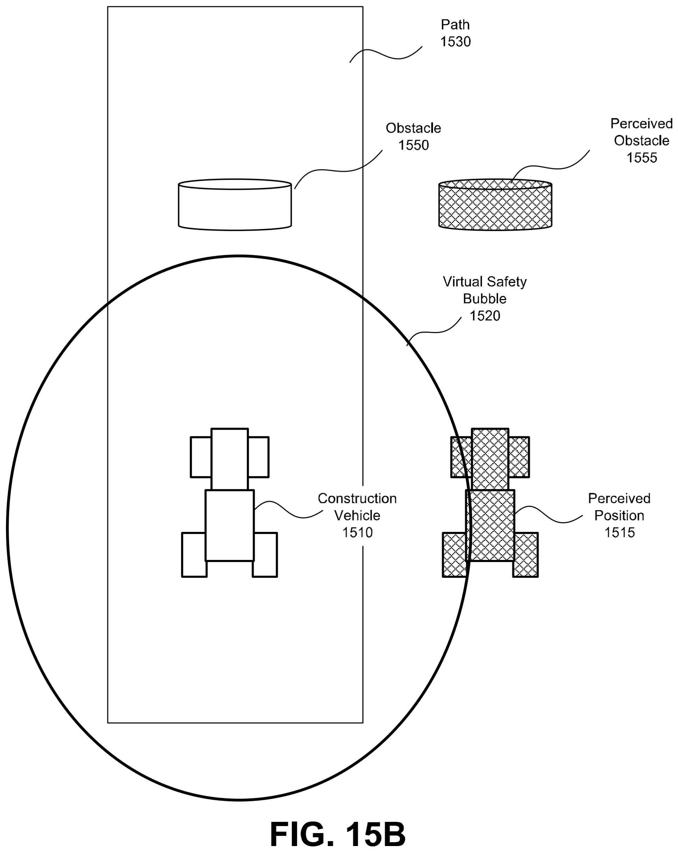

FIG. 15B illustrates navigation of a construction vehicle 1510 when on-path but perceived to be off-path, in accordance with one or more embodiments. This scenario is a converse to the scenario in FIG. 15A. If the construction vehicle 1510 encounters obstacle 1550 on the path 1530, though perceived to be off-path, e.g., perceived obstacle 1555 is not on the path 1530, the construction vehicle 1510 will enact preventive measures.

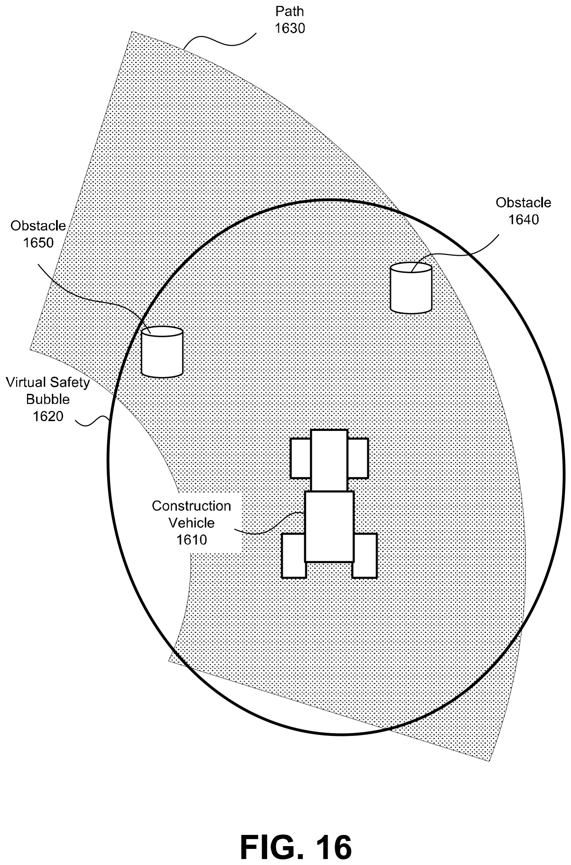

FIG. 16 illustrates navigation of a construction vehicle 1610 when on-turn on a curved path 1630, in accordance with one or more embodiments. On-turn refers to the control system's perceived turning curvature matching to the target turning curvature to remain on the curved path 1630 when performing the turn. Off-turn refers to the control system's perceived turning curvature rotationally offset from the target turning curvature to remain on the curved path 1630. The construction vehicle 1610 is an embodiment of the construction vehicle 100 comprising the control system 210. When on a curved path 1630, the construction vehicle 1610 may adjust the virtual safety bubble 1620 to account for the turning radius of the construction vehicle 1610. For example, the virtual safety bubble 1620 may be extended in a turning direction of the construction vehicle 1610. When the construction vehicle 1610 detects one or more obstacles 1640 and 1650 are within the virtual safety bubble 1620, the construction vehicle 1610 can enact preventive measures.

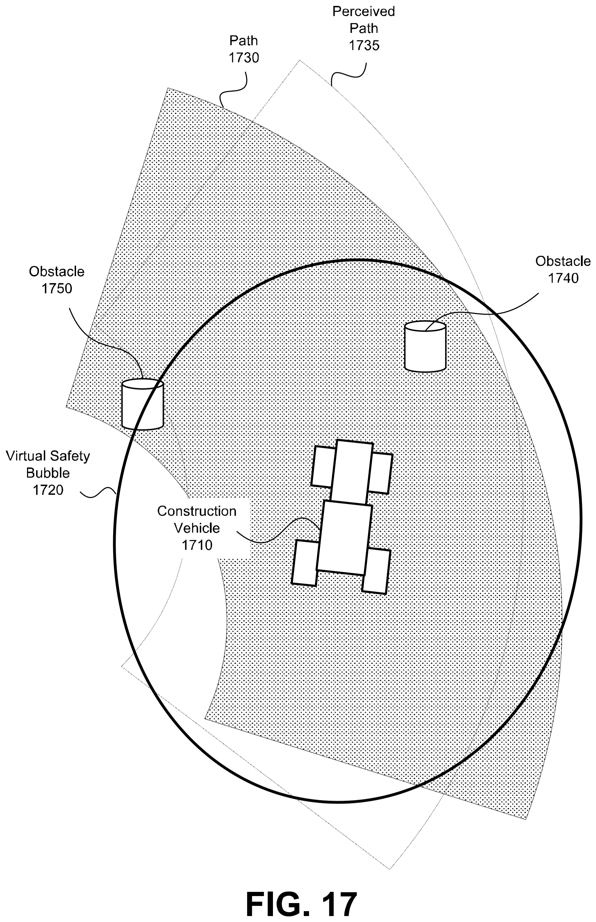

FIG. 17 illustrates navigation of a construction vehicle when off-turn on a curved path 1730, in accordance with one or more embodiments. The construction vehicle 1710 is an embodiment of the construction vehicle 100 comprising the control system 210. The construction vehicle 1710 may have a perceived orientation that is skewed from the actual orientation. In such scenario, the construction vehicle 1710 is traveling along a perceived curved path 1735 that is offset from the curved path 1730. The construction vehicle 1710 may enact course-correction navigation to align the construction vehicle's 1710 orientation, i.e., to align the perceived path 1735 to the actual path 1730. In one or more embodiments, the construction vehicle 1710 can utilize the detection mechanisms to locate obstacles 1740 and 1750 on the path 1730 as markers on the path 1730.

### XI. EXAMPLE COMPUTING SYSTEM

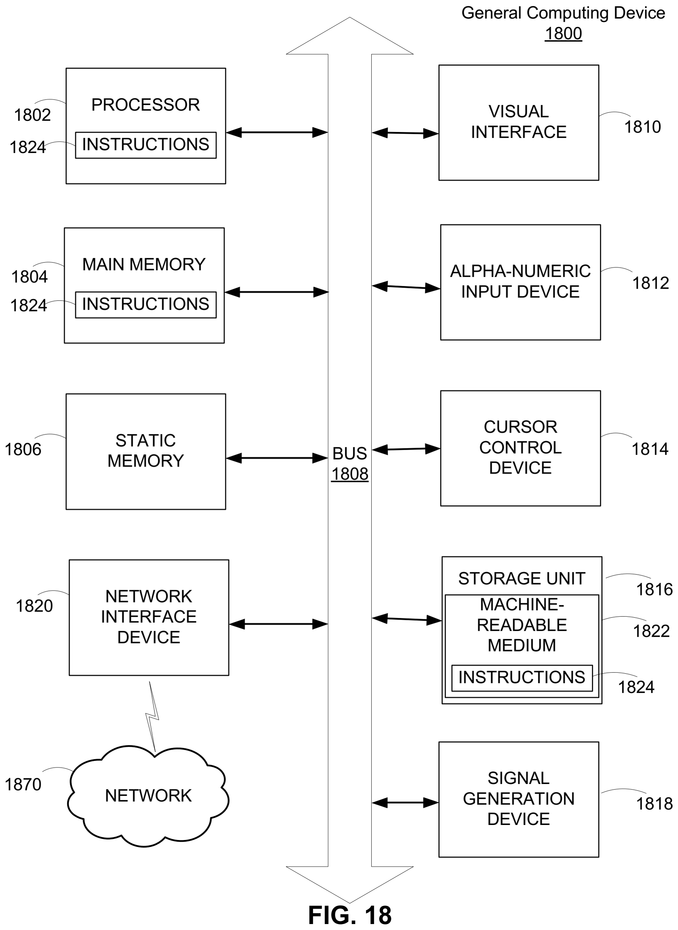

FIG. 18 is a block diagram illustrating components of an example machine able to read instructions from a machine-readable medium and execute them in a processor (or controller). Specifically, FIG. 18 shows a diagrammatic representation of a machine in the example form a computer system 1800, within which program code (e.g., software or software modules) for causing the machine to perform any one or more of the methodologies discussed herein may be executed. The program code may be comprised of instructions 1824 executable by one or more processors 1802. In alternative embodiments, the machine operates as a standalone device or may be connected (e.g., networked) to other machines. In a networked deployment, the machine may operate in the capacity of a server machine or a client machine in a server-client network environment, or as a peer machine in a peer-to-peer (or distributed) network environment.

The machine may be a server computer, a client computer, a personal computer (PC), a tablet PC, a set-top box (STB), a personal digital assistant (PDA), a cellular telephone, a smartphone, a web appliance, a network router, switch or bridge, or any machine capable of executing instructions 1824 (sequential or otherwise) that specify actions to be taken by that machine. Further, while only a single machine is illustrated, the term "machine" shall also be taken to include any collection of machines that individually or jointly execute instructions 1824 to perform any one or more of the methodologies discussed herein.

The example computer system 1800 includes a processor 1802 (e.g., a central processing unit (CPU), a graphics processing unit (GPU), a digital signal processor (DSP), one or more application specific integrated circuits (ASICs), one or more radio-frequency integrated circuits (RFICs), or any combination of these), a main memory 1804, and a static memory 1806, which are configured to communicate with each other via a bus 1808. The computer system 1800 may further include visual display interface 1810. The visual interface may include a software driver that enables displaying user interfaces on a screen (or display). The visual interface may display user interfaces directly (e.g., on the screen) or indirectly on a surface, window, or the like (e.g., via a visual projection unit). For ease of discussion the visual interface may be described as a screen. The visual interface 1810 may include or may interface with a touch enabled screen. The computer system 1800 may also include alphanumeric input device 1812 (e.g., a keyboard or touch screen keyboard), a cursor control device 1814 (e.g., a mouse, a trackball, a joystick, a motion sensor, or other pointing instrument), a storage unit 1816, a signal generation device 1818 (e.g., a speaker), and a network interface device 1820, which also are configured to communicate via the bus 1808.

The storage unit 1816 includes a machine-readable medium 1822 on which is stored instructions 1824 (e.g., software) embodying any one or more of the methodologies or functions described herein. The instructions 1824 (e.g., software) may also reside, completely or at least partially, within the main memory 1804 or within the processor 1802 (e.g., within a processor's cache memory) during execution thereof by the computer system 1800, the main memory 1804 and the processor 1802 also constituting machine-readable media. The instructions 1824 (e.g., software) may be transmitted or received over a network 190 via the network interface device 1820.

While machine-readable medium 1822 is shown in an example embodiment to be a single medium, the term "machine-readable medium" should be taken to include a single medium or multiple media (e.g., a centralized or distributed database, or associated caches and servers) able to store instructions (e.g., instructions 1824). The term "machine-readable medium" shall also be taken to include any medium that is capable of storing instructions (e.g., instructions 1824) for execution by the machine and that cause the machine to perform any one or more of the methodologies disclosed herein. The term "machine-readable medium" includes, but not be limited to, data repositories in the form of solid-state memories, optical media, and magnetic media.

### XII. CONSTRUCTION CONTEXT VIRTUAL SAFETY BUBBLE DEPLOYMENT

Operating autonomous construction vehicles in active worksites demands continuous monitoring of obstacles, animate objects, and environmental conditions to minimize damage to the vehicles or equipment and to minimize collision with animate objects such as human operators. Generation of a virtual safety bubble around a construction vehicle provides an adaptive, machine-interpreted exclusion zone that encloses the construction vehicle's form factor, acting as a buffer that mediates operation of the vehicle. In one or more embodiments, the control system of the construction vehicle can generate and deploy multiple virtual safety bubbles concurrently, with each virtual safety bubble having different parameters controlling responses triggered by breaches of the virtual safety bubble. For example, an outer virtual safety bubble can trigger cautionary behaviors such as speed reduction or horn or lighting cues, while an inner virtual safety bubble can enforce a hard stop, a re-route, task rescheduling, or some other immediate measure. Generation of the virtual safety bubbles can be dynamic and tailored to the circumstances, such as vehicle operational parameters with a vehicle kinematic model, environmental conditions such as muddied pathways due to precipitation, planned coordinated actions with other vehicles in a fleet, or expected effects from a construction action. This dynamic nature to the virtual safety bubble generation and deployment is a technical advantage in adapting the operability to the shifting circumstances.

In one or more embodiments, the control system of the construction vehicle generates or modifies the virtual safety bubble tailored in real time using the vehicle's kinematic model and operational parameters. These operational parameters may include: steering geometry (e.g., Ackermann vs. skid-steer), articulation angles, payload mass and center of gravity, braking capability and latency, tire-ground friction, grade, intended maneuver (tight turns, reversing, coupling), or some combination thereof. The control system can modify the virtual safety bubble to complement the kinematics. For example, as the construction vehicle speeds up, the control system elongates the virtual safety bubble in the direction of travel and expands with speed, inertia, control delay, or some combination thereof. In another example, the control system can expand a lateral width of the virtual safety bubble responsive to visibility being low, traction being low, perception having high uncertainty, or some combination thereof. Environmental conditions can also affect the kinematics of the construction vehicle. For example, a muddied pathway from precipitation reduces friction between the ground and the wheels, increasing stopping distance, introducing rutting or lateral slip, degrading sensor performance, or some combination thereof. In response, the control system can increase sizing of the virtual safety bubble to account for the above factor(s), e.g., adding in slip margins.

In one or more embodiments, the control system generates or modifies the virtual safety bubble based on a current position of the construction vehicle on the worksite. The control system can use a layout of the worksite, divided into zoned areas. The zoned areas may be classified into different zone types. Each zone or zone type can change operation of the virtual safety bubble. For example, in a zone corresponding to a high-traffic vehicle path, the control system can modify the virtual safety bubble to decrease a lateral width towards a centerline of the vehicle path, such that oncoming vehicles on the opposite side of the centerline do not breach the virtual safety bubble. Other zones can have other tailored changes or modifications to the virtual safety bubble and its operation.

In one or more embodiments, the control system generates or modifies the virtual safety bubble informed by coordination of a fleet of construction vehicles. The control system can modify the virtual safety bubble to allow permissive breaches for planned interactions with one or more other objects, one or more other vehicles, or some combination thereof. For example, an excavator and a dump truck are two types of vehicles that often coordinate with one another. The control system for the excavator can identify a planned interaction with the dump truck. The control system can modify operation of the virtual safety bubble to allow permissive breach by the dump truck. The control system for the dump truck can do likewise, modifying the virtual safety bubble for permissive breach by the excavator.

In one or more embodiments, the control system generates or modifies the virtual safety bubble based on expected effects of construction actions by the construction vehicle. As the construction vehicle is performing a construction action, the construction vehicle may change a state of the worksite. For example, in demolishing a structure, the demolition action has the causal effect of rubble dispersion. Accounting for this effect, the control system can modify the vehicle's own virtual safety bubble to avoid breach. In another example, the control system can generate a separate buffer around the object, such that a bystander in the object's buffer can prevent the control system from proceeding with the demolition action.

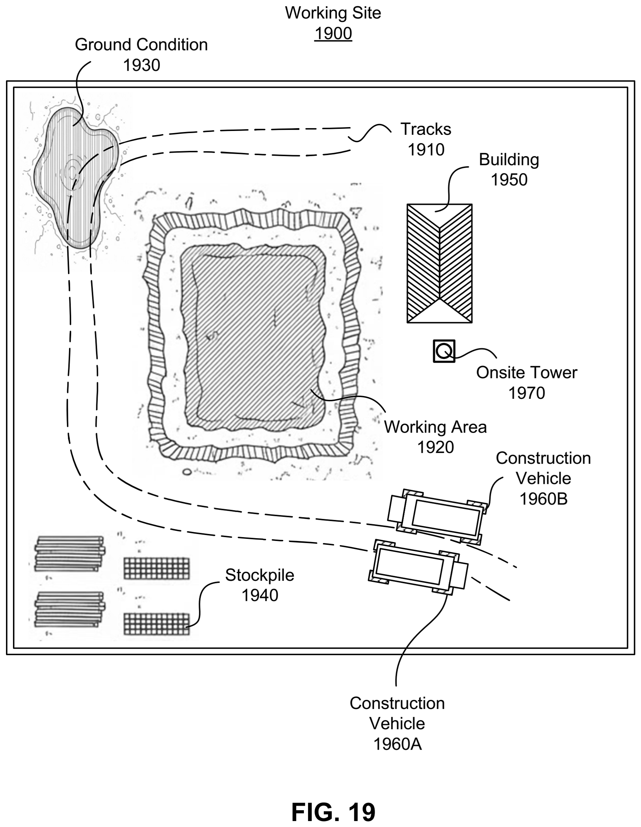

FIG. 19 is a layout of a working site 1900, according to one or more embodiments. The working site 1900 includes tracks 1910 circling around a working area 1920. There is a ground condition 1930, creating slippage between the vehicle and the ground. There can be a stockpile 1940 in another area of the working site 1900 with construction materials laid out in an organized fashion. There can be a building 1950 where one or more on-premises operators can coordinate the construction. There are one or more autonomous construction vehicles 1960, e.g., operating in a fleet, to perform construction actions on the worksite 1900. Each construction vehicle 1960 is an embodiment of the construction vehicle 100. Each construction vehicle 1960 has a control system (e.g., the control system 210) and a machine component array (e.g., the machine component array 230) with one or more sensors for sensing operational parameters of the construction vehicle. There may also be an onsite tower 1970 for networking the fleet of construction vehicles 1960 to coordinate actions among the fleet.

The onsite tower 1970 is a general computing device with transmitters and receivers for wireless networking to the control systems of the constructions vehicles 1960. The onsite tower 1970 transmits information to the control systems of the constructions vehicles 1960. Information may include instructions for a set of construction actions to be performed by each construction vehicle 1960. The control systems of the construction vehicles 1960 can also transmit information to the onsite tower 1970. In one or more embodiments, the onsite tower 1970 operates as a central point of communication between the construction vehicles 1970. In one or more embodiments, the onsite tower 1970 communicates with a cloud server (not shown), uploading or downloading information from the cloud server. In some implementations, the onsite tower 1970 may also store local models for processing information transmitted by the construction vehicles 1960 for onsite analysis and response.

The onsite tower 1970 may maintain a work schedule that assigns specific construction actions to each construction vehicle 1960. For example, different construction actions may include excavation passes, haul cycles, grading segments, compaction lanes, lifting operations, or material placement, that are disparately assigned to the different construction vehicles 1960, e.g., according to the capabilities of each. The work schedule can further indicate start and finish windows, task dependencies, designated intervals where multiple construction vehicles 1960 work together in coordinated maneuvers (e.g., loader-hauler pairs, convoy movements, shared crane lifts, or staggered dumping at a single bay), or some combination thereof.

The onsite tower 1970 may maintain a digital layout of the worksite, shared to the fleet of construction vehicles 1960. The digital layout is a spatial representation of the worksite, positioning the various objects at the worksite in a bounded region of the worksite. The digital layout may be two-dimensional, e.g., representing a top-down view of the worksite. The layout may include zoning of regions on the worksite, i.e., the layout may include zoned areas that define access and behavior for construction vehicles 1960. Adjustable operational parameters may include restricted safety perimeters, human-only corridors, staging and refueling zones, dynamic geofences around active machinery, material stockpiles, and temporary detours. The digital layout may further store information on environmental conditions, e.g., captured from fixed sensor systems positioned around the site (such as cameras, LiDAR, radar, weather stations, and GNSS beacons), or from telemetry and perception reports from the construction vehicles 1960 during deployment and operation. Example environmental conditions include, but are not limited to, ground moisture and traction levels, puddling or mud formation, visibility, dust, wind, temperature, and gradient stability. These environmental conditions can affect route plans, target speed ranges for the construction vehicles 1960, virtual safety bubble generation, or some combination thereof. As conditions change, the onsite tower 1970 may revise schedules, reassign tasks, update the digital layout, transmit the changed conditions to the construction vehicles 1960, or some combination thereof.

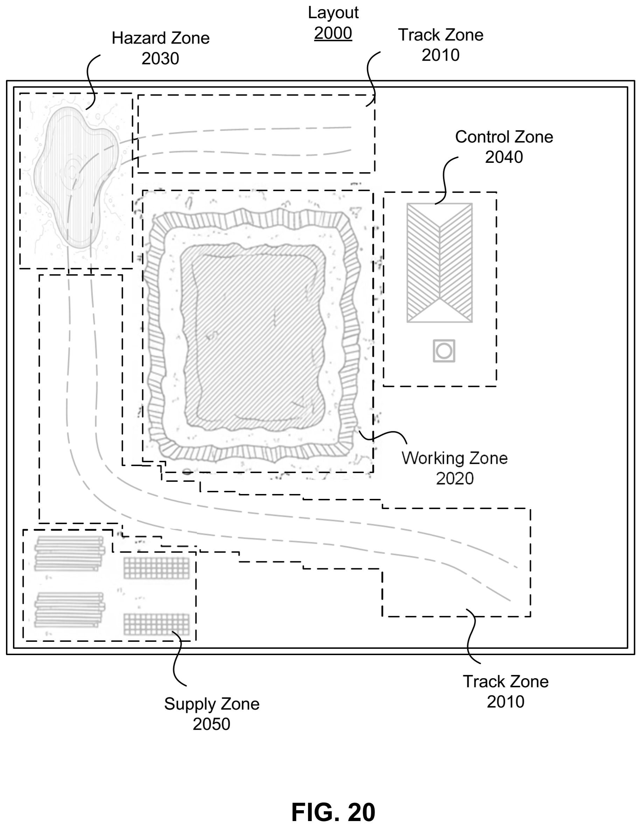

FIG. 20 is a layout 2000 of the working site 1900, according to one or more embodiments. The layout 2000 may include zoned areas. The layout 2000 includes a track zone 2010 that maps to the tracks 1910 around the worksite 1900, a working zone 2020 where active construction occurs, a hazard zone 2030 which may map to an environmental condition increasing risk of damage to the construction vehicle 1960, a control zone 2040 where operators may be stationed, and a supply zone 2050 where construction supplies are stored.

Each zoned area can include parameters for constraining behavior of the construction vehicles 1960. Each zoned area may have parameters constraining operational parameters of the construction vehicle 1960. For example, the track zone 2010 can have parameters that permit the construction vehicle 1960 to travel at speeds up to 15 miles per hour (mph), whereas the control zone 2040 can have parameters that limit the construction vehicle 1960 to travel at speeds up to 5 miles per hour (mph). As another example, the control zone 2040 can have parameters that interdict the construction vehicle 1960 from actuating a construction mechanism.

In some embodiments, each zoned area can have parameters affecting how the virtual safety bubble is generated for the construction vehicle 1960. In one embodiment, a zone can constrain how the virtual safety bubble is generated or modified. For example, the zone can set a maximum width to the virtual safety bubble. In another embodiment, a zone can constrain how the virtual safety bubble operates in deployment. For example, the virtual safety bubble may allow permissive breach by one or more object types. The control system can detect and classify objects in the environment of the construction vehicle. Upon identifying an object of an object type that is permitted to breach the virtual safety bubble without triggering remedial actions. The control system can have different permissions for each object type, e.g., a first object type is permitted to breach and dwell within the virtual safety bubble, a second object type is permitted to breach the virtual safety bubble for a duration of time, a third object type is not permitted to breach the virtual safety bubble, etc.

Additional examples follow of how different zoned areas can constrain virtual safety bubble generation or deployment. In the track zone 2010, the control system can generate a narrow virtual safety bubble to permit another construction vehicle to pass by in an adjacent lane without breach of the virtual safety bubble. Alternatively, the control system can identify an oncoming construction vehicle in the adjacent lane and allow permissive breach of the virtual safety bubble as the construction vehicles pass. In the working zone 2020, the control system can allow permissive breach of the virtual safety bubble as other construction vehicles operate in the vicinity. In the working zone 2020, the control system can allow permissive breach of construction supplies. In the working zone 2020, the control system can disallow any permissive breach by a human individual. In the hazard zone 2030, the control system can modify the virtual safety bubble to expand the virtual safety bubble in consideration of the environmental condition 1930 affecting the kinematics of the construction vehicle 1960. In the hazard zone 2030, the control system can limit a speed of the construction vehicle 1960 to avoid slippage or loss of control of the vehicle. In the control zone 2040, the control system can allow permissive breach by a human individual. In some embodiments, the control system can perform human classification to identify operators from bystanders, with differing responses to operators versus bystanders. For example, the control system can allow permissive breach by an operator while the vehicle is at a stop, whereas the control system does not allow permissive breach by the bystander and would trigger remedial actions upon breach by the bystander. In the supply zone 2050, the control system can allow permissive breach by other construction vehicles in the vicinity.

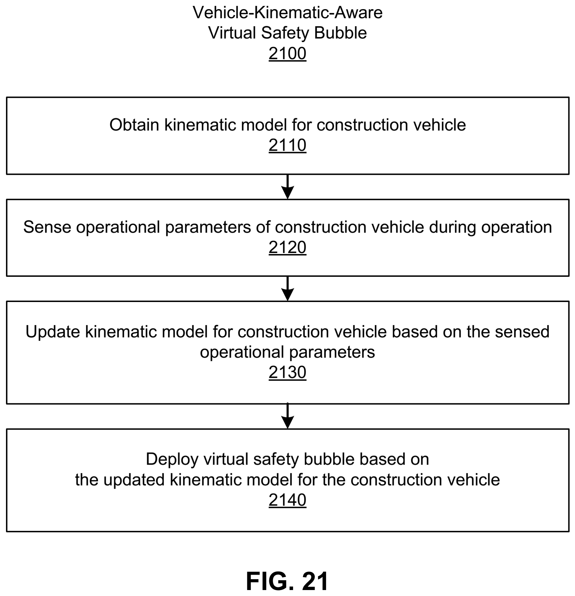

FIG. 21 is a flowchart describing a process 2100 of deploying a vehicle-kinematic-aware virtual safety bubble, according to one or more embodiments. The control system (e.g., the control system 210) of an autonomous construction vehicle may perform the process 2100. In particular, the safety bubble generation module 212 may perform the process 2100 or steps thereof. In other embodiments, another system may perform one or more of the steps in the process 2100, e.g., an onsite tower, a cloud server, etc.

The control system obtains 2110 a kinematic model for the construction vehicle. The kinematic model for the construction vehicle is a physics-based model that predicts motion constraints based on the physical configuration of the construction vehicle. For example, the kinematic model may predict maximum acceleration, maximum braking distance, turn radius, or other vehicle motion limitations based on a position of mechanisms, a load, sensed operational parameters of the vehicle, control inputs such as speed, steering angle, articulation rate, or gear selection, or some combination thereof. The kinematic model provides insight on motion constraints based on the vehicle's physical parameters, e.g., wheelbase, track width, steering geometry (Ackermann, skid-steer, tracked), articulation joints, implement offsets, counterweight overhang, load weight, load position, other physical characteristics, or some combination thereof For multi-body machines (e.g., articulated trucks, loaders, excavators), the kinematic model may track the relative motion of segments and joint limits to capture swing arcs, backing paths, and clearance envelopes. The kinematic model of the construction vehicle may be provided by another computing system, e.g., an onsite tower, a cloud server, etc. The kinematic model may include togglable inputs to adapt the motion constraints to the current operational parameters of the construction vehicle.

The control system senses 2120 operational parameters of the construction vehicle during operation. The control system (e.g., control system 210) measures operational parameters of the machine component array (e.g., machine component array 230). The control system senses operational parameters continuously, e.g., at some frequency during operation of the construction vehicle, to characterize vehicle state, and environmental context for protected autonomy and efficient task execution. These operational parameters may include pose and motion (e.g., IMU data, velocity, acceleration, wheel speeds, slip), guidance inputs (e.g., steering angle, articulation or joint angles, gear and throttle commands), stopping capability (e.g., brake pressure and temperature, estimated stopping distance), construction mechanism state (e.g., position of the mechanism, hydraulic pressures in hydraulics controlling the mechanism), payload and stability (e.g., load weight or mass, center-of-gravity, rollover margin), powertrain and energy (e.g., engine rotations per minute, engine torque, fuel rate, battery SOC, inverter, cooling temperatures), chassis and traction (e.g., tire pressure, tire temperature, track tension, ground contact estimates, friction coefficients inferred from micro-slip), and perception signals (e.g., camera visibility, LiDAR visibility, other sensor detectability, proximity ranges, confidence of captured metrics, occlusion). The control system can also monitor diagnostics (e.g., ECU fault codes, CAN bus health, latency, jitter), environmental conditions (e.g., slope grade, surface roughness, moisture, visibility, wind), and work schedule progress (e.g., completed or remaining tasks, cycle counts). A suite of sensors (e.g., sensors 222 on external systems 220, or sensors 236 on the machine component array 230) can capture operational parameters of the control system 2120.

The control system updates 2130 the kinematic model for the construction vehicle based on the sensed operational parameters. The control system updates the kinematic model, e.g., in real-time, by fusing the sensed operational parameters with observed motion to recalibrate how the control inputs map to vehicle motion. For example, using positioning, motion data, wheel speeds, steering and articulation angles, mechanism positions, payload estimates, or some combination thereof, the control system can adapt parameters of the kinematic model such as steering ratio and offset, articulation-to-yaw gain, effective wheel radius, or differential-track slip coefficients. The control system can also base updates to the kinematic model on environmental conditions such as grade, roughness, and inferred friction from micro-slip. For example, the control system can adjust feasible curvature, curvature rate, stopping margins, can update geometry of the vehicle (e.g., boom height, bucket extension, counterweight swing), can update the vehicle's clearance envelopes, or some combination thereof. With the updated kinematic model, the control system can update navigation paths to improve coordination with the fleet of vehicles. The control system can transmit updates to a central computing system (e.g., the onsite tower 1970), with which the central computing system can push out updates across the fleet of vehicles. For example, slippage in the wheels at one region of the worksite can implicate an environmental condition that is updated into the digital layout of the worksite, with the central computing system pushing out that update to other vehicles in the fleet.

The control system deploys 2140 the virtual safety bubble based on the updated kinematic model for the construction vehicle. The control system (e.g., the control system 210) can generate or modify the virtual safety bubble accounting for the motion constraints of the construction vehicle. In one example, the control system can identify a larger stopping margin based on the brake fluid in a braking mechanism running hot. In response, the control system can generate a larger safety bubble to account for the larger stopping margin. In particular, the control system can extend the safety bubble in a direction of travel. As another example, the control system can identify that the construction vehicle has a payload that affects a turn radius of the vehicle. Accordingly, the control system can expand the virtual safety bubble in the direction of the turn, during the turning operation. The size of expansion or the direction of expansion can be varied based on the payload mass. In yet another example, the control system can actuate a mechanism of the construction vehicle to be in an expanded configuration (e.g., the boom is extended). Based on this physical configuration and the updated kinematic model, the control system can increase a size of the virtual safety bubble in all directions to account for the increased potential drop radius of objects attached to the end of the boom.

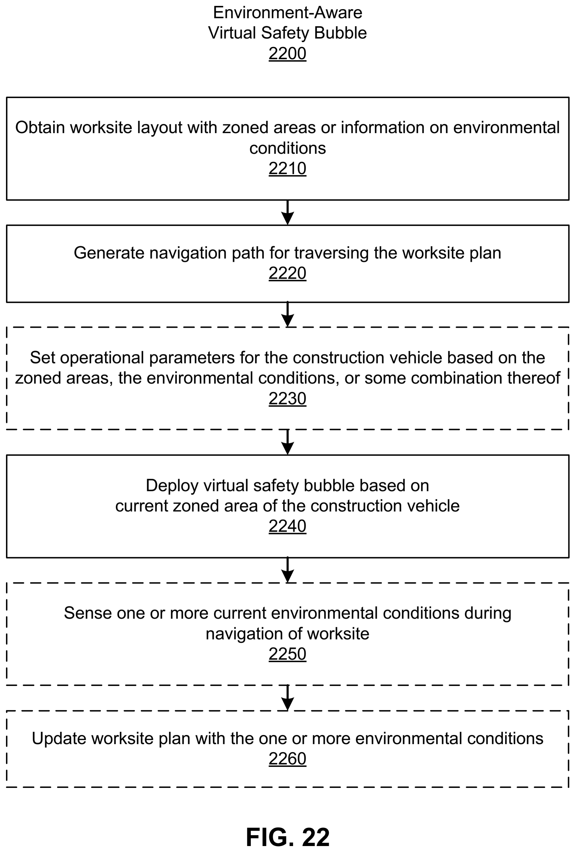

FIG. 22 is a flowchart describing a process 2200 of deploying an environment-aware virtual safety bubble, according to one or more embodiments. The control system (e.g., the control system 210) of an autonomous construction vehicle may perform the process 2200. In particular, the safety bubble generation module 212 may perform the process 2200 or steps thereof. In other embodiments, another system may perform one or more of the steps in the process 2200, e.g., an onsite tower, a cloud server, etc.

The control system obtains 2210 a worksite layout with zoned areas and information on environmental conditions. The worksite layout can be curated and maintained by a central computing system (e.g., the onsite tower 1970, or a cloud server). The control system can fuse the worksite layout with sensor data captured in real-time, e.g., camera data, LiDAR data, motion data, vehicle telemetry, etc. In one or more embodiments, the control system maintains a local version of the worksite layout. The local version can include information derived from the vehicle's one or more sensors. In some embodiments, the control system reconciles differences between the local version and the global version received from the central computing system. The control system can use confidences in different pieces of information to determine which piece of information to use as ground truth moving forward in operation. For example, the global layout may indicate that there is an environmental condition (e.g., a muddied area) that has a confidence of 70%. The control system can determine that the environmental condition is no longer present based on the sensor data, with a confidence of 80%. The control system can accept the local determination for planning operations of the vehicle. In some embodiments, the control system reconciles differences between the local version and information collected from one or more other construction vehicles. The control system can compare the confidence in the information of the local version with confidences of the information from the other construction vehicles. In some embodiments, the control system reconciles differences between the local version and information input by a user (e.g., an operator). The control system can defer to the information input by the user. In some implementations, the control system uses a threshold confidence of the environmental condition determined by the sensor data of the construction vehicle to override the information input by the user (e.g., 80%, 85%, 90%, or 95%). For example, the operator may input that worksite has zero grade, i.e., no slope. The control system may determine based on the sensor data that there is a slope at the current position with a 95% confidence. If the confidence threshold of 90% was used for overring user input, the control system overrides the user input as the 95% confidence surpasses the 90% confidence threshold. In other implementations, the control system can transmit a confirmation request to the operator indicating the sensed environmental condition against the user input information. The control system can request the operator to provide final say on the environmental condition.

In some embodiments, the worksite layout encodes zoned areas as layered geofences. Each zoned area can have parameters constraining operational parameters of the construction vehicle, such as access level (e.g., vehicles, humans), right-of-way, speed limits, directional lanes, staging/refueling bays, material stockpiles, utility corridors, hazard/exclusion zones, time-windowed for constructions actions, or some combination thereof.

In some embodiments, the worksite layout includes information on environmental conditions. These environmental conditions may include precipitation, wind, temperature, dust, visibility, ground moisture, traction, surface topography, slope stability, sensor occlusion likelihood, or some combination thereof. The worksite layout may be time-stamped, versioned, and distributed to the control systems of the fleet of construction vehicles.

The control system generates 2220 a navigation path for traversing the worksite based on the worksite layout. The control system can generate the navigation path factoring in the different zoned areas and the environmental conditions. The control system can generate the navigation path based on the schedule of construction actions assigned to the construction vehicle. For example, the schedule may dictate picking up some material at a supply zone and placement of that material at the active work zone. The control system can generate a navigation path that leverages tracks or high-traffic paths to maneuver about the worksite. The control system can also generate the navigation path to avoid potential hazard zones. For example, if there is a muddied area, the control system can generate the navigation path to avoid the muddied area.

The control system may set 2230 operational parameters based on the zoned areas, the environmental conditions, or some combination thereof. The control system can set operational parameters including speed or acceleration maximums, steering curvature or articulation limits, stopping-distance margins, traction-control gains, payload thresholds, route planning, or coordination priority with other vehicles. For example, in a zone where operators may stand while overseeing operation, the control system can enforce a crawl speed limit, can expand virtual safety bubbles, provide audio-visual signaling, restrict mechanism actuation, or some combination thereof. The control system can also set operational parameters based on the environmental conditions. The control system can also set operational parameters based on a combination of the zoned areas and the environmental conditions. In such embodiments, the control system can apply the most conservative constraints.

The control system deploys 2240 the virtual safety bubble based on the current zoned area, the current environmental condition, or some combination thereof. The control system can generate or modify the virtual safety bubble accounting for the zoned areas or the environmental conditions. In one example, the control system can identify that the current zoned area is a work zone. In response, the control system can generate a larger safety bubble to account for higher impact construction actions being performed. As another example, the control system can identify that the construction vehicle is in a control zone where operators are. Accordingly, the control system can allow permissive breaches by the operators. The permissive breach can be further timed, e.g., for 5 minutes. If the operator dwells in the virtual safety bubble for more than 5 minutes, then the control system can enact remedial actions. In yet another example, the control system can identify that the vehicle is in a hazard zone due to an environmental condition. Based on the hazard, the control system increases the virtual safety bubble to account for increased likelihood of loss of control of the vehicle.

The control system may sense 2250 one or more environmental conditions during navigation of the worksite. The control system may sense environmental conditions via one or more sensors as the construction vehicle navigates the worksite. In one example, the control system can detect conversion of power applied to the wheels or the track and motion data of the vehicle responsive to the applied power. Based on this conversion, the control system can ascertain the ground traction. In another example, the control system can use an IMU to determine a grade of a sloped area.

The control system may update 2260 the worksite layout with the detected environmental conditions. Updating the worksite layout may entail tagging the local version with these detected environmental conditions. The control system may transmit to the central computing system the updated conditions, e.g., for dispersion to other vehicles in the fleet.

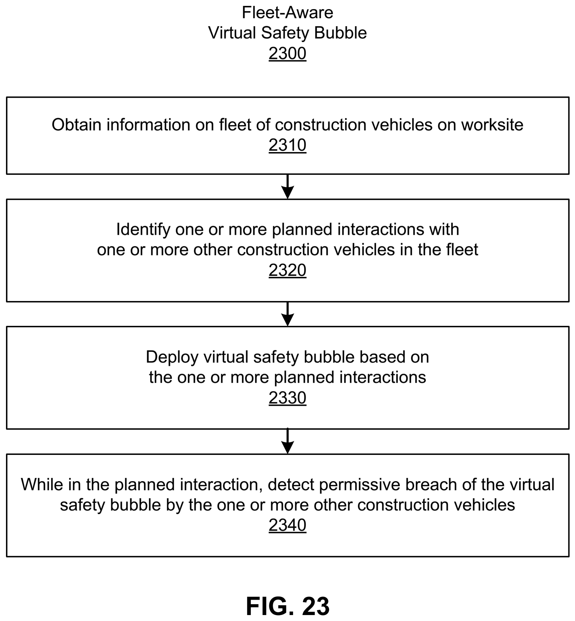

FIG. 23 is a flowchart describing a process 2300 of deploying a fleet-aware virtual safety bubble, according to one or more embodiments. The control system (e.g., the control system 210) of an autonomous construction vehicle may perform the process 2300. In particular, the safety bubble generation module 212 may perform the process 2300 or steps thereof. In other embodiments, another system may perform one or more of the steps in the process 2300, e.g., an onsite tower, a cloud server, etc.

The control system obtains 2310 information on a fleet of construction vehicles on a worksite. The information on the fleet of construction vehicles may indicate a current position of each vehicle and a schedule of construction actions for each. The information may include an optimized orchestration of movement by the fleet of vehicles.

The control system identifies 2320 one or more planned interactions with one or more other construction vehicles in the fleet. The control system may identify these planned interactions by cross-referencing the work schedules of each pairing of the current vehicle and another vehicle in the fleet. The control system may plot out predicted paths to find spatiotemporal overlaps. In some embodiments, the control system can also identify coordinated actions by two of more vehicles as planned interactions. Examples of planned interactions include loader-hauler rendezvous, convoy movements, shared access of a stockpile, oncoming vehicles on a navigation path, synchronized lifts, and staggered dumping or resupply. For each planned interaction, the control system may compute a time window, an approach by the other vehicle, role assignments, conflict points, or some combination thereof.

The control system deploys 2330 a virtual safety bubble based on the one or more planned interactions. The control system can deploy the virtual safety bubble to allow permissive breach by the other vehicle. In some embodiments, the control system can leverage multiple safety bubbles, where an outer bubble is deployed to allow permissive breach by the vehicle, whereas an inner bubble for direct collision avoidance maintains its trigger of any breach.

In one or more embodiments, the control systems for two interacting vehicles can merge the bubble of each vehicle into a grouped bubble. The grouped bubble is moderated by the sensors of each vehicle. For example, a loader is loading a payload onto a dump truck. The dump truck's rearview is occluded by the loader's presence. Similarly, the loader's front view is occluded by the dump truck's presence. The two vehicles can merge bubbles to generate a group bubble that is moderated by at least the front-facing sensors of the dump truck and the rear-facing sensors of loader, including the sideview sensors of each. If an object breaches the group bubble, the vehicle that detects the breach can transmit a notification to the other vehicle of the breached group bubble. Either or both vehicles can enact remedial actions to minimize damage or harm from the breach.

The control system, while in the planned interaction, detects 2340 a permissive breach of the virtual safety bubble by the one or more other construction vehicles. The control system detects a permissive breach of the virtual safety bubble by the one or more other construction vehicles when a coordinated partner enters the virtual safety bubble, e.g., when vehicles pass by one another, or when vehicles are coordinating to perform a joint task. Upon a permissive breach, the vehicles can adjust operational parameters, e.g., reduced speed, tighter following gaps, implement position limits, or stop-short buffers. In some embodiments, the control system can permit breach of an outer safety bubble, while maintaining the inner safety bubble. The system can log the planned interaction and update the central computing system.

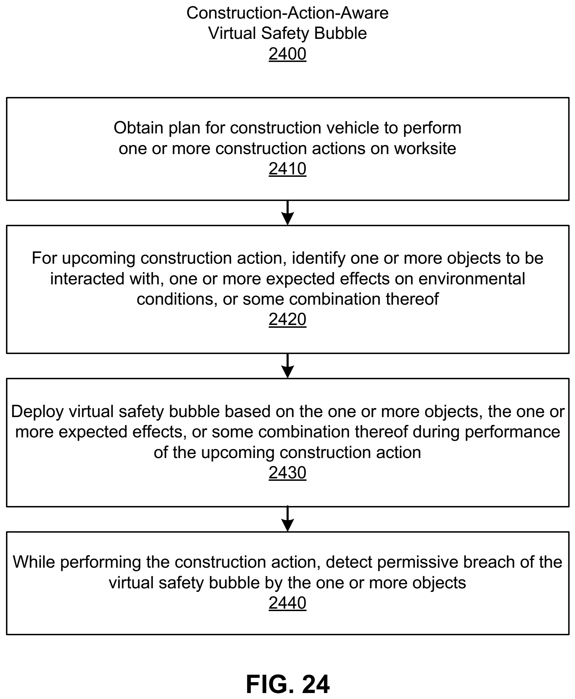

FIG. 24 is a flowchart describing a process 2400 of deploying a construction-action-aware virtual safety bubble, according to one or more embodiments. The control system (e.g., the control system 210) of an autonomous construction vehicle may perform the process 2400. In particular, the safety bubble generation module 212 may perform the process 2400 or steps thereof. In other embodiments, another system may perform one or more of the steps in the process 2400, e.g., an onsite tower, a cloud server, etc.

The control system obtains 2410 a plan for the construction vehicle to perform one or more construction actions on the worksite. The plan includes action types and parameters for each action. The plan can further specify which actions may implicate certain objects. Example actions include excavation passes, haul cycles, grading segments, compaction lifts, and lifts or placements. Parameters include georeferenced locations, entry or exit points, sequencing of steps, step dependencies, quality tolerances, time windows, or some combination thereof.

The control system, for an upcoming construction action, identifies 2420 one or more objects to be interacted with, one or more expected effects on environmental conditions, or some combination thereof. Objects can include stockpiles, spoil piles, pallets, pipes, rebar bundles, formwork, utility markers, trench faces, material bays, hoppers, and staging racks, as well as dynamic assets like other vehicles or tagged equipment to be coupled or loaded. Upon identifying the objects expected to be interacted with, the control system can identify and track those objects, e.g., with image data captured from a camera system. Expected environmental effects are predicted outcomes of the construction action. Predicted outcomes can include dust plumes during dumping, splash or slurry spread with wet material, temporary visibility occlusions, ground rutting or settlement, lateral slip on mud, vibration near fragile structures, and wind-driven sway during lifts. The control system may use physics-based models for modeling the predicted outcomes for each action.

The control system deploys 2430 the virtual safety bubble based on the one or more objects to be interacted with, the one or more expected effects on environmental conditions, or some combination thereof. The control system can, for example, expand or reshape the virtual safety bubble to account for the expected environmental effects. With decreased visibility from a dust plume during dumping, the control system may increase a size of the virtual safety bubble to account for the more limited visibility. Cooperative constraints can also be distributed to nearby construction vehicles. The control system can further update the virtual safety bubble as conditions continue to change during the construction action. In another example, during the demolition of a structure, the control system can anticipate dispersion of rubble that can collide with other objects or humans. As such, the control system can increase a sizing of the virtual safety bubble to encompass the structure being acted on. In some embodiments, the control system can generate a secondary virtual buffer around the object being acted on. This, however, is limited by the detection capabilities from the perspective of the vehicle.

The control system, while performing the construction action, detects 2440 permissive breach of the virtual safety bubble by the one or more objects. Using proximity sensors, LiDAR/radar, vision-based object recognition, or some combination thereof, the control system confirms the breaching object matches the expected object. For example, demolition of a structure may have the expectation of rubble formation in the vicinity of the vehicle. As the rubble is dispersed, the control system can permit breach and dwelling of the rubble in the virtual safety bubble. If the breach, however, deviates from expectations (e.g., there is an unknown object that breaches, the object is impeding operation, etc.), then the control system can enact remedial actions responsive to the deviant breach.

### XIII. EXAMPLE CLAUSES

Clause 1. A computer-implemented method for autonomous operation of a construction vehicle in a worksite, the computer-implemented method comprising: obtaining a kinematic model for the construction vehicle that predicts motion constraints based on a physical configuration of the construction vehicle; sensing, during operation of the construction, operational parameters of the construction vehicle; updating the kinematic model based on the sensed operational parameters; deploying a virtual safety bubble based on the updated kinematic model, wherein the virtual safety bubble triggers remedial actions upon detection of breach of the virtual safety bubble by an object; detecting breach of the virtual safety bubble by an object; and responsive to the breach, enacting one or more remedial actions to avoid collision of the object and the construction vehicle.

Clause 2. The computer-implemented method of clause 1, wherein updating the kinematic model comprises updating one or more parameters of the kinematic model based on the sensed operational parameters; and predicting updated motion constraints on the construction vehicle with the updated kinematic model.

Clause 3. The computer-implemented method of clause 2, wherein deploying the virtual safety bubble based on the updated kinematic model comprises: setting a shape of the virtual safety bubble based on the updated kinematic model, or setting a size of the virtual safety bubble based on the updated kinematic model.

Clause 4. The computer-implemented method of any of clauses 1-3, wherein the physical configuration comprises a combination of: a wheelbase, a track width, steering geometry, one or more articulation joints, payload weight, and payload position.

Clause 5. The computer-implemented method of any of clauses 1-4, wherein the kinematic model models a multi-body machine tracking motion of a plurality of segments.

Clause 6. The computer-implemented method of any of clauses 1-5, wherein sensing the operational parameters comprises: sensing, via a temperature sensor implemented on the construction vehicle, temperature of braking fluid in a braking mechanism of the construction vehicle, wherein updating the kinematic model comprises updating a stopping-distance margin based on the temperature of the braking fluid.

Clause 7. The computer-implemented method of clause 6, wherein deploying the virtual safety bubble comprises elongating the virtual safety bubble in a direction of travel to accommodate an increased stopping-distance margin.

Clause 8. The computer-implemented method of any of clauses 1-7, wherein sensing the operational parameters comprises: sensing, via a load sensor implemented on the construction vehicle, a mass of a payload loaded on the construction vehicle, or a position of the payload on the construction vehicle, wherein updating the kinematic model comprises updating a maximum turn radius for the construction vehicle loaded with the payload based on the mass of the payload or the position of the payload the construction vehicle.

Clause 9. The computer-implemented method of clause 8, wherein deploying the virtual safety bubble comprises: expanding the virtual safety bubble in a direction of a turn during a turning maneuver based on the maximum turn radius for the construction vehicle.

Clause 10. The computer-implemented method of any of clauses 1-9, wherein sensing the operational parameters comprises: detecting deployment of a mechanism on the construction into an expanded configuration, and updating the kinematic model based on the expanded configuration.

Clause 11. The computer-implemented method of clause 10, wherein deploying the virtual safety bubble comprises: increasing a size of the virtual safety bubble in all directions when a mechanism of the construction vehicle is actuated into an expanded configuration, including a boom extension, to account for an increased potential drop radius of objects attached to the mechanism.

Clause 12. The computer-implemented method of any of clauses 1-11, further comprising: updating a navigation path of the construction vehicle based on the updated kinematic model.

Clause 13. A computer-implemented method for autonomous operation of a construction vehicle in a worksite, the computer-implemented method comprising: obtaining a worksite layout including zoned areas and information on environmental conditions on the worksite, each zoned area having one or more parameters that constrain operation of the construction vehicle; generating a navigation path for traversing the worksite based on the one or more parameters of each zoned area and the information on environmental conditions on the worksite; deploying a virtual safety bubble based on parameters of a current zoned area where the construction vehicle is, wherein the virtual safety bubble triggers remedial actions upon detection of an object in breach of the virtual safety bubble; detecting breach of the virtual safety bubble by an object; and responsive to the breach, enacting one or more remedial actions to avoid collision of the object and the construction vehicle.

Clause 14. The computer-implemented method of clause 13, further comprising: capturing sensor data from one or more sensors implemented on the construction vehicle, the sensor data describing operation of the construction vehicle; determining an environmental condition on the worksite based on the sensor data; and fusing the information on environmental conditions from the worksite layout with the environment condition determined from the sensor data.

Clause 15. The computer-implemented method of any of clauses 13-14, whereon the worksite layout is a global version obtained from a central computing system, the computer-implemented method further comprising: reconciling differences between a local version of the worksite layout in use by the construction vehicle and the worksite layout obtained from the central computing system using confidence values between information in the local version and information in the global version.

Clause 16. The computer-implemented method of any of clauses 13-15, wherein the information on the environmental conditions comprises information on a combination of: precipitation, wind, temperature, dust, visibility, ground moisture, traction, surface topography, and slope stability,.

Clause 17. The computer-implemented method of any of clauses 13-16, wherein generating the navigation path comprises: generating the navigation path to avoid one or more regions of the worksite with environmental conditions affecting mobility of the construction vehicle.

Clause 18. The computer-implemented method of any of clauses 13-17, further comprising: setting operational parameters that constrain operation of the construction vehicle based on the current zoned area and the information on the environmental conditions on the worksite.

Clause 19. The computer-implemented method of clause 18, wherein setting the operation parameters comprises: configuring a combination of: a speed maximum, an acceleration maximum, a steering curvature limit, an articulation limit, a stopping-distance margin, a traction-control gain, and a payload threshold.

Clause 20. The computer-implemented method of any of clauses 13-19, wherein deploying the virtual safety bubble is further based on the information on the environmental conditions on the worksite.

Clause 21. The computer-implemented method of any of clauses 13-20, wherein the current zoned area is a work zone where construction actions are performed by the construction vehicle, and wherein deploying the virtual safety bubble comprises: increasing a size of the virtual safety bubble within the work zone.

Clause 22. The computer-implemented method of clause 21, wherein deploying the virtual safety bubble further comprises: deploying the virtual safety bubble with permissive breach by one or more other construction vehicles or one or more objects identified as construction materials within the control zone.

Clause 23. The computer-implemented method of any of clauses 13-22, wherein the current zoned area is a control zone with operators in the vicinity, and wherein deploying the virtual safety bubble comprises: deploying the virtual safety bubble with permissive breach by the operators within the control zone.

Clause 24. The computer-implemented method of clause 23, wherein deploying the virtual safety bubble further comprises: deploying the virtual safety bubble with a time window for permissive breach by operators, wherein dwelling of an operator in breach of the virtual safety bubble beyond the time window triggers one or more remedial actions to clear the operator of the virtual safety bubble.

Clause 25. The computer-implemented method of any of clauses 13-24, wherein the current zoned area is a hazard zone with one or more environmental conditions affecting mobility of the construction vehicle, and wherein deploying the virtual safety bubble comprises: increasing a size of the virtual safety bubble within the hazard zone.

Clause 26. A computer-implemented method for autonomous operation of a first construction vehicle in a worksite, the computer-implemented method comprising: obtaining, at the first construction vehicle, information on a second construction vehicle including a current position of the second construction vehicle, a schedule of construction actions for the second construction vehicle; identifying a planned interaction between the first construction vehicle and the second construction vehicle; deploying a virtual safety bubble for the first construction vehicle based on the planned interaction, wherein breach of the virtual safety bubble triggers remedial actions, and wherein the virtual safety bubble permits breach by the second construction vehicle during the planned interaction; detecting breach of the virtual safety bubble by the second construction vehicle during the planned interaction; and responsive to the breach of the virtual safety bubble by the second construction vehicle during the planned interaction, withholding the remedial actions.

Clause 27. The computer-implemented method of clause 26, wherein identifying the planned interaction comprises: cross-referencing the schedule of the second construction vehicle and a schedule of the first construction vehicle to identify the planned interaction, or plotting a path of the first construction vehicle and a predicted path of the second construction vehicle to identify any spatiotemporal overlap as the planned interaction.

Clause 28. The computer-implemented method of any of clauses 26-27, wherein deploying the virtual safety bubble comprises: merging, during the planned interaction, the virtual safety bubble of the first construction vehicle and a virtual safety bubble of the second construction vehicle to form a grouped bubble moderated by the first construction vehicle and the second construction vehicle.

Clause 29. The computer-implemented method of clause 28, further comprising: detecting a breach of the grouped bubble by an object that is not either the first construction vehicle or the second construction vehicle; and responsive to detecting the breach of the grouped bubble by the object, transmitting from the first construction vehicle a notification to the second construction vehicle to cause one or more remedial actions by the second construction vehicle.

Clause 30. A computer-implemented method for autonomous operation of a construction vehicle in a worksite, the computer-implemented method comprising: obtaining a work schedule for the construction vehicle to perform one construction action; identifying one or more objects to be interacted with by the construction vehicle while performing the one construction action; deploying a virtual safety bubble for the construction vehicle based on the one construction action, wherein breach of the virtual safety bubble triggers remedial actions, and wherein the virtual safety bubble permits breach by the one or more identified objects during the construction action; detecting breach of the virtual safety bubble by the one or more identified objects during the construction action; and responsive to the breach of the virtual safety bubble by the one or more identified objects during the construction action, withholding the remedial actions.

Clause 31. The computer-implemented method of clause 30, further comprising: identifying one or more environmental effects predicted to occur following the one construction action; wherein deploying the virtual safety bubble for the construction vehicle is further based on the identified one or more environmental effects.

Clause 32. The computer-implemented method of clause 31, wherein identifying the one or more environmental effects comprises: applying a physics-based model to the one or more objects being interacted with to predict the one or more environmental effects.

Clause 33. A non-transitory computer-readable storage medium storing instructions that, when executed by a computer processor, cause the computer processor to perform the computer-implemented method of any of clauses 1-32.

Clause 34. A construction vehicle comprising a computer processor, and the non-transitory computer readable storage medium of clause 33, optionally comprising: one or more detection mechanisms for sensing operational parameters of the construction vehicle, one or more construction mechanisms for performing one or more construction actions.

### IV. ADDITIONAL CONSIDERATIONS

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of components, modules, or mechanisms. Modules may constitute either software modules (e.g., code embodied on a machine-readable medium or in a transmission signal) or hardware modules. A hardware module is tangible unit capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may comprise dedicated circuitry or logic that is permanently configured (e.g., as a special-purpose processor, such as a construction site programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple of such hardware modules exist contemporaneously, communications may be achieved through signal transmission (e.g., over appropriate circuits and buses) that connect the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or processors or processor-implemented hardware modules. The performance of certain of the operations may be distributed among the one or more processors, not only residing within a single machine, but deployed across one or more machines, e.g., computer system 700. In some example embodiments, the processor or processors may be located in a single location (e.g., within a home environment, an office environment or as a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., application program interfaces (APIs).)

The performance of certain of the operations may be distributed among the one or more processors, not only residing within a single machine, but deployed across a number of machines. It should be noted that where an operation is described as performed by "a processor," this should be construed to also include the process being performed by more than one processor. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Some portions of this specification are presented in terms of algorithms or symbolic representations of operations on data stored as bits or binary digital signals within a machine memory (e.g., a computer memory). These algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. It should be understood that these terms are not intended as synonyms for each other. For example, some embodiments may be described using the term "connected" to indicate that two or more elements are in direct physical or electrical contact with each other. In another example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the invention. This description should be read to include one or at least one and the singular also includes the plural unless it is obvious that it is meant otherwise.

Upon reading this disclosure, those of skill in the art will appreciate still additional alternative structural and functional designs for a system and a process for providing CMC change assessment through the disclosed principles herein. Thus, while particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation and details of the method and apparatus disclosed herein without departing from the disclosed principles.

## Claims

1. A computer-implemented method for autonomous operation of a construction vehicle in a worksite, the computer-implemented method comprising:
obtaining a work schedule for the construction vehicle to perform one construction action;
identifying one or more objects to be interacted with by the construction vehicle while performing the one construction action;
deploying a virtual safety bubble for the construction vehicle based on the one
construction action, wherein breach of the virtual safety bubble triggers remedial actions, and wherein the virtual safety bubble permits breach by the one or more identified objects during the construction action;
detecting breach of the virtual safety bubble by the one or more identified objects during the construction action; and
responsive to the breach of the virtual safety bubble by the one or more identified objects during the construction action, withholding the remedial actions.

2. The computer-implemented method of claim 1, wherein identifying the one or more objects to be interacted with by the construction vehicle comprises identifying a planned interaction between the construction vehicle and a second construction vehicle.

3. The computer-implemented method of claim 2, wherein identifying the planned interaction between the construction vehicle and the second construction vehicle comprises:
obtaining, at the construction vehicle, information on the second construction vehicle including a current position of the second construction vehicle, a schedule of construction actions for the second construction vehicle; and
cross-referencing the schedule of the second construction vehicle and a schedule of the first construction vehicle to identify the planned interaction.

4. The computer-implemented method of any one of claims 2-3, wherein identifying the planned interaction comprises: plotting a path of the first construction vehicle and a predicted path of the second construction vehicle to identify any spatiotemporal overlap as the planned interaction.

5. The computer-implemented method of any one of claims 2-4, wherein deploying the virtual safety bubble comprises: merging, during the planned interaction, the virtual safety bubble of the first construction vehicle and a virtual safety bubble of the second construction vehicle to form a grouped bubble moderated by the first construction vehicle and the second construction vehicle.

6. The computer-implemented method of claim 5, further comprising:
detecting a breach of the grouped bubble by an object that is not either the first construction vehicle or the second construction vehicle; and
responsive to detecting the breach of the grouped bubble by the object, transmitting from the first construction vehicle a notification to the second construction vehicle to cause one or more remedial actions by the second construction vehicle.

7. The computer-implemented method of any one of claims 1-6, further comprising:
identifying one or more environmental effects predicted to occur following the one construction action;
wherein deploying the virtual safety bubble for the construction vehicle is further based on the identified one or more environmental effects.

8. The computer-implemented method of claim 7, wherein identifying the one or more environmental effects comprises:
applying a physics-based model to the one or more objects being interacted with to predict the one or more environmental effects.

9. A construction vehicle comprising:
a computer processor; and
a non-transitory computer-readable storage medium storing instructions for autonomous operation of the construction vehicle in a worksite, the instructions that, when executed by the computer processor, cause the computer processor to perform operations comprising:
obtaining a work schedule for the construction vehicle to perform one construction action;
identifying one or more objects to be interacted with by the construction vehicle while performing the one construction action;
deploying a virtual safety bubble for the construction vehicle based on the one construction action, wherein breach of the virtual safety bubble triggers remedial actions, and wherein the virtual safety bubble permits breach by the one or more identified objects during the construction action;
detecting breach of the virtual safety bubble by the one or more identified objects during the construction action; and
responsive to the breach of the virtual safety bubble by the one or more identified objects during the construction action, withholding the remedial actions.

10. The construction vehicle of claim 9, wherein identifying the one or more objects to be interacted with by the construction vehicle comprises identifying a planned interaction between the construction vehicle and a second construction vehicle.

11. The construction vehicle of claim 10, wherein identifying the planned interaction between the construction vehicle and the second construction vehicle comprises:
obtaining, at the construction vehicle, information on the second construction vehicle including a current position of the second construction vehicle, a schedule of construction actions for the second construction vehicle; and
cross-referencing the schedule of the second construction vehicle and a schedule of the first construction vehicle to identify the planned interaction.

12. The construction vehicle of any of claims 10-11, wherein identifying the planned interaction comprises: plotting a path of the first construction vehicle and a predicted path of the second construction vehicle to identify any spatiotemporal overlap as the planned interaction.

13. The construction vehicle of any of claims 10-12, wherein deploying the virtual safety bubble comprises:
merging, during the planned interaction, the virtual safety bubble of the first construction vehicle and a virtual safety bubble of the second construction vehicle to form a grouped bubble moderated by the first construction vehicle and the second construction vehicle.

14. The construction vehicle of claim 13, further comprising:
detecting a breach of the grouped bubble by an object that is not either the first construction vehicle or the second construction vehicle; and
responsive to detecting the breach of the grouped bubble by the object, transmitting from the first construction vehicle a notification to the second construction vehicle to cause one or more remedial actions by the second construction vehicle.

15. The construction vehicle of any of claims 10-14, further comprising:
identifying one or more environmental effects predicted to occur following the one construction action;
wherein deploying the virtual safety bubble for the construction vehicle is further based on the identified one or more environmental effects.
